# EUROPEAN PATENT APPLICATION

(11) **EP 4 123 556 A1**
(43) Date of publication of application: **25.01.2023**
(21) Application number: 21771982.2
(22) Date of filing: 05.03.2021
(51) Int. Cl.: G06Q 50/06, G06Q 20/38

(54) **NODE, TRANSACTION SYSTEM, PROCESSING METHOD, PROGRAM, AND BLOCKCHAIN NETWORK**

(30) Priority: 19.03.2020 JP 2020050091; 04.02.2021 JP 2021016803
(71) Applicant: Ricoh Company, Ltd., Tokyo 143-8555 (JP)
(72) Inventor: KASAMATSU, Takuma, Tokyo 143-8555 (JP)
(74) Representative: J A Kemp LLP
(86) International application number: PCT/JP2021/008724
(87) International publication number: WO 2021/187170

(57) **Abstract**

It is an object to prevent double issuance when issuing a certificate of a production method of asset.

A node 9 or 9A on a blockchain network 90 stores asset information, which indicates a type of production method of an asset and indicates an issuance status of a certificate for certifying the production method. The node 9 or 9A receives issuance request information indicating a request to issue a certification for a particular asset, transmitted from an image processing apparatus 7 or 7A (an example of an information processing apparatus). When the issuance status of the asset corresponding to the received issuance request information is "not issued", the node 9 or 9A updates the issuance status indicated in the stored asset information to "issued". When the issuance status of the asset corresponding to the received issuance request information is "issued", the node 9 or 9A transmits an issuance completion notification indicating that the certificate has been issued to the image processing apparatus 7 or 7A.

## Description

### [Technical Field]

The present invention relates to a node, a transaction system, a processing method, a program, and a blockchain network.

### [Background Art]

In recent years, electricity produced from renewable energy (referred to as "green power" in Japan) has been attracting attention. This electricity is electricity produced from a subset of renewable resources such as solar light, solar heat, wind power, biomass, geothermal power, hydropower, and heat in the atmosphere. In comparison with power generation using fossil fuels such as oil, coals, and liquefied natural gases, power generation using renewable energies hardly emits CO2 that causes global warming. Therefore, among resources used for power production, renewable energies are environmentally friendly energy sources. By operating such as factories using the above-described green power, which is environmentally friendly, companies can increase brand credibility. There is a method for using a blockchain technology to carry out transactions of electricity produced from renewable energy (see PTL1).

Even in a case where a method for producing asset differs, such as in a case where a type of resource used to produce asset such as electricity differs, quality of the asset such as electricity provided to a user would be the same. Therefore, the user does not know whether or not the provided electricity is produced using renewable energy. In view of this, to prove a transaction of asset such as electricity produced from renewable energy, a certificate is used, which has been issued by a certification authority such as a certificate issuing company approved by a national or local public institution. For example, a company can apply for issuance of a certificate and use the issued certificate to prove creation of an added value to the environment, thus improving the brand credibility. There is also known a method for using a blockchain technology in transaction of securities having characteristics similar to those of the certificate (see PTL2).

### [Citation List]

### [Patent Literature]

[PTL 1]
   Japanese Unexamined Patent Application Publication No. 2019-144851
[PTL 2]
   Japanese Translation of PCT International Application Publication No. JP-T-2018-521437

### [Summary of Invention]

### [Technical Problem]

However, in order to avoid unauthorized use of a certificate issued by the certification authority, it is necessary to prevent a certificate having the same content from being issued a plurality of times. However, in the conventional method, it has been difficult to know whether or not a certificate has been issued, such that a certificate having the same content may have been issued twice.

### [Solution to Problem]

To solve the above-described issue, according to claim 1 of the invention, a node on a blockchain network is provided, which includes: storage means configured to store asset information, the asset information indicating a type of a production method of an asset and an issuance status of a certificate that certifies the production method; reception means configured to receive issuance request information transmitted from an information processing apparatus, the issuance request information requesting issuance of the certificate for a particular asset; asset processing means configured to the asset information that is stored to have an issued state of issued, in a case where the particular asset corresponding to the received issuance request information has an issuance status of unissued; and transmission means configured to transmit, to the information processing apparatus, an issuance completion notification indicating that the certificate has been issued in a case where the particular asset corresponding to the received issuance request information has an issuance status of issued.

### [Advantageous Effects of Invention]

As described above, according to the present invention, when issuing a certificate of a production method of asset, double issuance of the same certificate is prevented.

### [Brief Description of Drawings]

FIG. 1 is a schematic view illustrating a transaction system according to an embodiment.
FIG. 2 is a diagram illustrating a hardware configuration of a smartphone.
FIG. 3 is a diagram illustrating a hardware configuration of a smart meter.
FIG. 4 is a diagram illustrating a hardware configuration of an intermediary server, a certificate issuing server, and a node.
FIG. 5 is a diagram illustrating a hardware configuration of an image processing apparatus.
FIG. 6 is a block diagram illustrating functional configurations of the smartphone and the smart meter in the transaction system.
FIG. 7 is a block diagram illustrating a functional configuration of the intermediary server, the certificate issuing server, and the node in the transaction system.
FIG. 8 is a block diagram illustrating a functional configuration of the image processing apparatus in the transaction system.
FIG. 9A is a conceptual diagram illustrating a user management table.
FIG. 9B is a conceptual diagram illustrating a supplier management table.
FIG. 10A is a conceptual diagram illustrating a transaction details management table.
FIG. 10B is a conceptual diagram illustrating a transaction history management table.
FIG. 11A is a conceptual diagram illustrating an applicant management table.
FIG. 11B is a conceptual diagram illustrating a certificate type management table.
FIG. 12 is a sequence diagram illustrating processing of registering an intermediary agent.
FIG. 13A is a diagram illustrating a display example of an intermediary agent registration screen.
FIG. 13B is a diagram illustrating a display example of an intermediary agent registration screen.
FIG. 14 is a sequence diagram illustrating processing of registering transaction details of asset.
FIG. 15A is an illustration of an example transaction details registration screen before information is entered or selected.
FIG. 15B is an illustration of an example transaction details registration screen after information is entered or selected.
FIG. 16 is a sequence diagram illustrating processing of setting the intermediary agent as an owner of the asset provided by the supplier.
FIG. 17 is a conceptual diagram illustrating transaction information and asset information.
FIG. 18 is a sequence diagram illustrating processing of setting the user as an owner of the asset for which transfer is intermediated by the intermediary agent.
FIG. 19 is a conceptual diagram illustrating transaction information and asset information, when a transaction of electricity is carried out.
FIG. 20 is a sequence diagram illustrating processing of issuing a production method certificate of asset.
FIG. 21A is an illustration of an example of a certificate issuance screen before information is entered or selected.
FIG. 21B is an illustration of an example of a certificate issuance screen after information is entered or selected.
FIG. 22 is a sequence diagram illustrating processing of issuing a production method certificate of asset.
FIG. 23 is a conceptual diagram illustrating transaction information and asset information, when the certificated is issued.
FIG. 24 is a diagram illustrating an example of a printed production method certificate.
FIG. 25 is a block diagram illustrating a functional configuration of the intermediary server, the certificate issuing server, and the node in the transaction system according to the modified example 1.
FIG. 26 is a sequence diagram illustrating processing of issuing a production method certificate of asset, performed by the transaction system according to the modified example 1.
FIG. 27 is a sequence diagram illustrating processing of issuing a production method certificate of asset, performed by the transaction system according to the modified example 1.
FIG. 28 is a block diagram illustrating a functional configuration of the image processing apparatus in the transaction system according to the modified example 2.
FIG. 29 is a sequence diagram illustrating processing of issuing a production method certificate of asset, performed by the transaction system according to the modified example 2.
FIG. 30 is a sequence diagram illustrating processing of issuing a production method certificate of asset, performed by the transaction system according to the modified example 2.
FIG. 31 is a sequence diagram illustrating processing of issuing a production method certificate of asset, performed by a transaction system according to the modified example 3.
FIG. 32 is a sequence diagram illustrating processing of issuing a production method certificate of asset, performed by the transaction system according to the modified example 3.
FIG. 33A is an illustration of an example of an applicant information input screen.
FIG. 33B is an illustration of an example of a certificate issuance screen.

### [Description of Embodiments]

Hereinafter, embodiments of the present invention will be described with reference to the drawings. In the description of the drawings, the same components are denoted by the same reference numerals, and overlapping description will be omitted.

### Overview of System Configuration

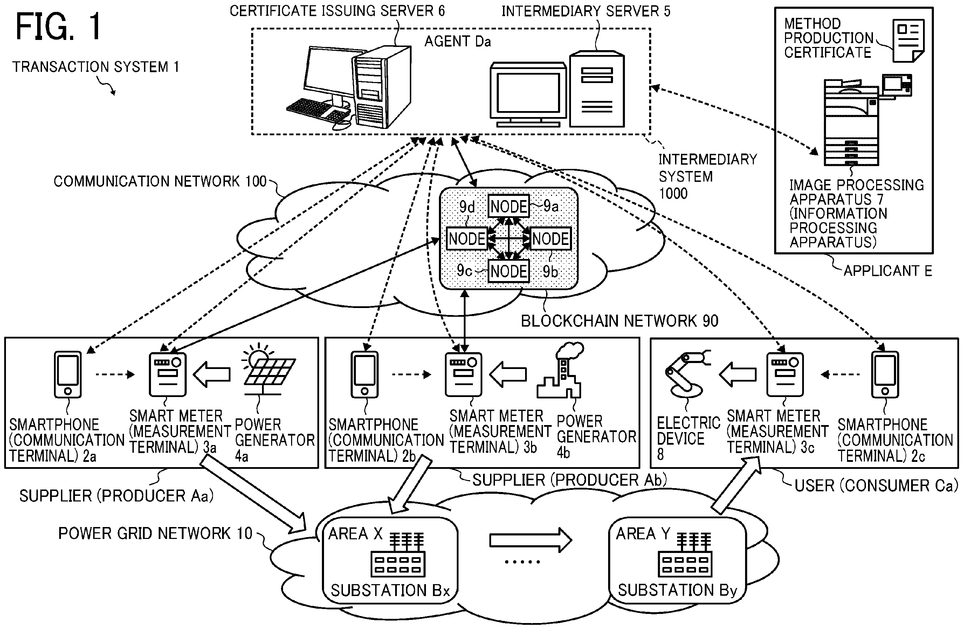

First, an outline of a configuration of a transaction system (tracking system) 1 is described. FIG. 1 is a schematic view of an example of the transaction system according to the present embodiment. In this disclosure, the case in which electricity is used as an example of an asset is described. The ownership of the asset and the production method of the asset are managed using asset information described later.

### Explanation on Each Entity

As illustrated in FIG. 1, the transaction system 1 is used by a producer Aa of electricity, a producer Ab of electricity, a consumer Ca of electricity, an intermediary agent Da, and an applicant E. Producer Aa, an example of a supplier, is an entity that produces electricity from solar light, as one example of an entity that produces electricity from renewable energy resource (referred to as "green power" in Japan). Producer Ab, an example of a supplier, is an entity that produces electricity from oil as an example of fossil fuel. The supplier may be a union that purchases assets from each producer and resells the assets. The consumer Ca, an example of a user, is an entity that consumes electricity supplied from the producer Aa or Ab. In case the asset is not consumed like electricity, such as in the case of a real estate property, the user may be an owner who currently owns the asset. The intermediary agent Da is an entity that intermediates transfer of ownership of electricity between different entities. The applicant E is a user who files various applications using a production method certificate issued by a public institution such as a national or local public entity that certifies a certain type of electricity production method. Example types of electricity production method include a production method using solar light or solar heat, a production method using wind power, a production method using biomass, a production method using geothermal power, a production method using hydroelectric resources, a production method using heat in the atmosphere, and a production method using nuclear power. Of those various types of electricity production methods, the electricity production methods using, for example, solar light, solar heat, wind power, biomass, geothermal power, hydropower, and heat in the atmosphere are grouped into a production method using renewable energy. The electricity production methods using petroleum, coal, and liquefied natural gas are grouped into a production method using fossil fuel. Compared to power generation using fossil fuel, power generation using renewable energy emits almost no CO₂, which is a cause for global warming. That is, renewable energy is an energy resource that is environmentally friendly. In this embodiment, as examples of renewable energy resource, solar light or solar heat, wind power, biomass, geothermal power, hydropower, and heat in the atmosphere are referred. Further, as examples of fossil fuel, oil, coal, and liquefied natural gas are referred.

The intermediary agent Da issues a production method certificate on behalf of a public institution such as a national or local public entity. The intermediary agent Da carries out the issuance of a production method certificate in response to an issuance request from an application form E, and provides the issued production method certificate to the applicant E. With the production method certificate, the applicant E can apply for public subsidy, for example, based on the renewable energy usage ratio (or CO₂ reduction rate) of the applicant company.

The number of producers may be one or three or more. There may be multiple consumers or intermediary agents.

### Power Grid Network

The substation Bx is a substation nearest to the producers Aa and Ab. The substation By is a substation nearest to the consumer Ca. The power grid network 10 includes substations Bx and By, transmission lines, and distribution lines, etc. The electricity supplied from the producers Aa and Ab is distributed to the consumer Ca via the power grid network 10.

### Data Communication Network

The producer Aa is equipped with a smartphone 2a, a smart meter 3a, and a power generator 4a. The producer Ab is equipped with a smartphone 2b, a smart meter 3b, and a power generator 4b. The consumer Ca is equipped with a smartphone 2c, a smart meter 3c, and an electric device 8. The intermediary agent Da manages an intermediary system 1000 including an intermediary server 5 and a certificate issuing server 6. The intermediary agent Da may be a corporation or an individual (for example, a president, an executive officer, or an employee such as an information technology (IT) system administrator). The applicant E is equipped with an image processing apparatus 7.

The number of smartphones may be two or four or more, depending on the number of producers and consumers. Hereinafter, the smartphones 2a, 2b, and 2c may be collectively referred to as the smartphone 2. Further, the number of smart meters 3a, 3b, and 3c may be two or four or more, depending on the number of producers and consumers. Hereinafter, the smart meters 3a, 3b, and 3c may be collectively referred to as the smart meter 3. The number of power generators 4a and 4b may be one or three or more, depending on the number of producers. Hereinafter, the power generators 4a and 4b may be collectively referred to as the power generator 4.

The number of intermediary systems 1000 may be two or more, depending on the number of intermediary agents. Further, the intermediary server 5 and the certificate issuing server 6 may each be implemented by a single computer or a plurality of computers. The number of electric devices 8 may be two or more, depending on the number of consumers.

As illustrated in FIG. 1, the transaction system (tracking system) 1 that resides on a data communication network includes the plurality of smartphones 2a, 2b, and 2c, the plurality of smart meters 3a, 3b, and 3c, the plurality of power generators 4a and 4b, the image processing apparatus 7, the intermediary system 1000, and a plurality of nodes 9a, 9b, 9c, and 9d each implemented by such as a computer. Further, the nodes 9a, 9b, 9c, and 9d form a blockchain network 90. The blockchain network 90 is formed on the communication network 100 such as the Internet. The communication network 100 includes the Internet, a mobile communication network, a local area network (LAN), and the like. The communication network 100 may include not only wired communication network but also wireless communication network such as mobile communication system (4G, 5G, 6G, etc.) and Worldwide Interoperability for Microwave Access (WiMAX). Although there are actually a large number of nodes exist, only four nodes 9a, 9b, 9c, and 9d are illustrated in the figure for simplicity. The nodes 9a, 9b, 9c, and 9d are managed by such as different companies. The intermediary agent Da may be any one of these different companies. Hereinafter, the nodes 9a, 9b, 9c, and 9d may be collectively referred to as the node 9. The node 9 is, for example, a smartphone, a tablet terminal, a mobile phone, or a PC (personal computer).

Next, the terminals and devices of the producers Aa and Ab, the consumer Ca, the intermediary agent Da, and the applicant E are described.

### (Terminal and Devices of Producer Aa)

The smartphone 2a communicates data with the smart meter 3a by short-range wireless technology such as Near Field Communication (NFC) or BLUETOOTH. Further, the smartphone 2a communicates data with the intermediary server 5 via the communication network 100.

The smart meter 3a communicates data with the intermediary server 5 via the communication network 100. Further, the smart meter 3a measures an amount of electricity produced by the power generator 4a every predetermined time period (for example, every 30 minutes). The smart meter 3a performs processing such as requesting the node 9 of the blockchain network 90 to generate asset information indicating the amount of asset that can be provided such as electric power and the ownership of such asset.

The power generator 4a is a device that generates electricity from solar light.

### (Terminals and Devices of Producer Ab)

The smartphone 2b communicates data with the smart meter 3b by short-range wireless technology such as Near Field Communication (NFC) or BLUETOOTH. Further, the smartphone 2b communicates data with the intermediary server 5 via the communication network 100.

The smart meter 3b communicates data with the intermediary server 5 via the communication network 100. Further, the smart meter 3b measures an amount of electricity produced by the power generator 4b every predetermined time period (for example, every 30 minutes). The smart meter 3b performs processing such as requesting the node 9 of the blockchain network 90 to generate asset information indicating the amount of asset that can be provided such as electric power and the ownership of such asset.

The power generator 4b is a device that generates electricity from oil.

### (Terminals and Devices of Consumer Ca)

The smartphone 2c communicates data with the smart meter 3c by short-range wireless technology such as Near Field Communication (NFC) or BLUETOOTH. Further, the smartphone 2c communicates data with the intermediary server 5 via the communication network 100.

The smart meter 3c communicates data with the intermediary server 5 via the communication network 100. Further, the smart meter 3c measures an amount of electricity consumed by the electric device 8 every predetermined time period (for example, every 30 minutes). The smart meter 3c performs processing such as transmitting usage information indicating the amount of electricity consumed, and a duration of time when electricity is consumed, etc., to the intermediary server 5 via the communication network 100. In the present embodiment, since the intermediary server 5 accesses the blockchain network 90 on behalf of the smart meter 3c, the smart meter 3c does not need to directly access the blockchain network 90.

The electric device 8 is any device that is operated with electricity supplied by the consumer Aa and/or Ab.

### (Terminals and Devices of Intermediary Agent Da)

The intermediary system 1000 includes the intermediary server 5 and the certificate issuing server 6. The intermediary server 5 intermediates transaction of asset, such as ownership of asset such as electricity, between a supplier of asset and a user of asset. For transaction, the intermediary server 5 communicates data with each smartphone 2 and each smart meter 3 via the communication network 100. Further, the intermediary server 5 accesses the node 9 of the blockchain network 90 to communicate data with the node 9. The certificate issuing server 6 processes intermediation of transactions in relation to issuance of a certificate, which certifies a production method of an asset such as electricity. For transaction, the certificate issuing server 6 communicates data with the image processing apparatus 7 via the communication network 100. Further, the certificate issuing server 6 accesses the node 9 of the blockchain network 90 to communicate data with the node 9. The intermediary system 1000 may be, for example, a computer in which all or some of the functions of the intermediary server 5 and the certificate issuing server 6 are integrated.

### (Terminals and Devices of Applicant E)

The image processing apparatus 7 is, for example, an image forming apparatus having an image processing function and a communication function, such as an MFP (Multifunction Peripheral/Printer/Product), a facsimile machine, a scanner, or a printer. The image processing apparatus 7 is not limited to an apparatus installed at a specific location, and may be a handy printer or handy scanner that is portable.

### (Supplement)

Smartphones 2a and 2b are examples of communication terminals of the providers. The smartphone 2c is an example of a communication terminal of the user. Examples of communication terminal also include smart watches, PCs, and smart glasses. The smart meter 3 is an example of a measurement terminal. The image processing apparatus 7 is an example of an information processing apparatus. Further, the image processing apparatus 7 may have a system configuration implemented by a plurality of apparatuses that together carryout its functions that are distributed over the plurality of apparatuses. For example, the function of inputting and transmitting various types of information of the image processing apparatus 7, and the function of receiving and outputting data transmitted from the outside may be implemented by different apparatuses. Specifically, for example, the image processing apparatus 7 may have a system configuration in which input and transmission of various types of information are executed by a terminal device such as a smartphone, a tablet terminal, or a PC, and reception and output of data are executed by the image processing apparatus 7.

### Hardware Configuration

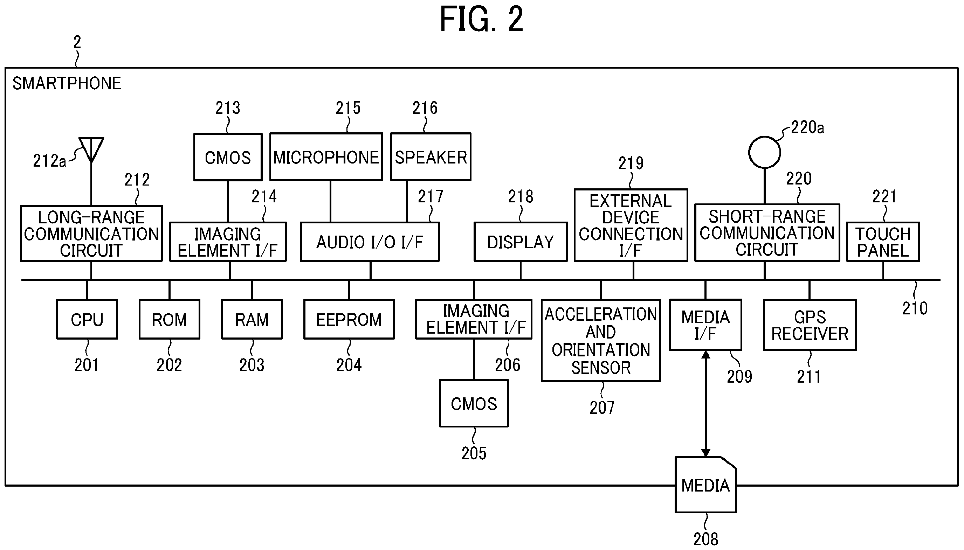

Next, referring to FIGs. 2 to 5, hardware configurations of the smartphone 2, the smart meter 3, the intermediary server 5, the certificate issuing server 6, the image processing apparatus 7, and the node 9 are described.

### Hardware Configuration of Smartphone

FIG. 2 is a diagram illustrating a hardware configuration of a smartphone. As illustrated in FIG. 2, the smartphone 2 includes a central processing unit (CPU) 201, read only memory (ROM) 202, random access memory (RAM) 203, Electrically Erasable Programmable ROM (EEPROM) 204, Complementary Metal Oxide Semiconductor (CMOS) sensor 205, image element interface (I/F) 206, acceleration and orientation sensor 207, media I/F 209, and Global Positioning System (GPS) receiver 211.

Of these, the CPU 201 controls entire operation of the smartphone 2. The ROM 202 stores a program for executing the CPU 201, such as the CPU 201 or an initial program loader (IPL). The RAM 203 is used as a work area for the CPU 201. The EEPROM 204 reads or writes various data such as a program for a smartphone under control of the CPU 201. The CMOS (Complementary Metal Oxide Semiconductor) sensor 205 is an example of a built-in imaging means that captures an object (mainly, a self-image of a user) under control of the CPU 201 to obtain image data. In alternative to the CMOS sensor 205, imaging means such as a CCD (charge-coupled device) sensor can be used. The imaging element I/F 206 is a circuit that controls driving of the CMOS sensor 205. The acceleration and orientation sensor 207 includes various sensors such as an electromagnetic compass or gyrocompass for detecting geomagnetism and an acceleration sensor. The media I/F 209 controls reading and writing (storing) of data from and to a storage medium 208 such as a flash memory. The GPS receiver 211 receives a GPS signal from a GPS satellite.

The smartphone 2 further includes a long-range communication circuit 212, a CMOS sensor 213, an imaging element I/F 214, a microphone 215, a speaker 216, an audio input/output I/F 217, a display 218, an external device connection I/F (Interface) 219, a short-range communication circuit 220, an antenna 220a for the short-range communication circuit 220, and a touch panel 221.

Of these, the long-range communication circuit 212 is a circuit that communicates with other device through the communication network 100. The CMOS sensor 213 is an example of built-in imaging means that captures an object under control of the CPU 201 to obtain image data. The imaging element I/F 214 is a circuit that controls driving of the CMOS sensor 213. The microphone 215 is a built-in circuit that converts audio into an electric signal. The speaker 216 is a built-in circuit that generates audio such as music or voice by converting an electric signal into physical vibration. The audio input/output I/F 217 is a circuit for inputting or outputting an audio signal between the microphone 215 and the speaker 216 under control of the CPU 201. The display 218 is an example of display means that displays an image of the object, various icons, etc. Examples of the display 218 include a liquid crystal display (LCD) and an organic electroluminescence (EL) display. The external device connection I/F 219 is an interface for connecting to various external devices. The short-range communication circuit 220 is a communication circuit that communicates in compliance with the NFC (near field communication), the BLUETOOTH (Registered Trademark), and the like. The touch panel 221 is an example of input means that allows a user to operate the smartphone 2 by touching the display 218.

The smartphone 2 further includes a bus line 210. The bus line 210 is an address bus or a data bus, which electrically connects the components illustrated in FIG. 2 such as the CPU 201.

### Hardware configuration of smart meter

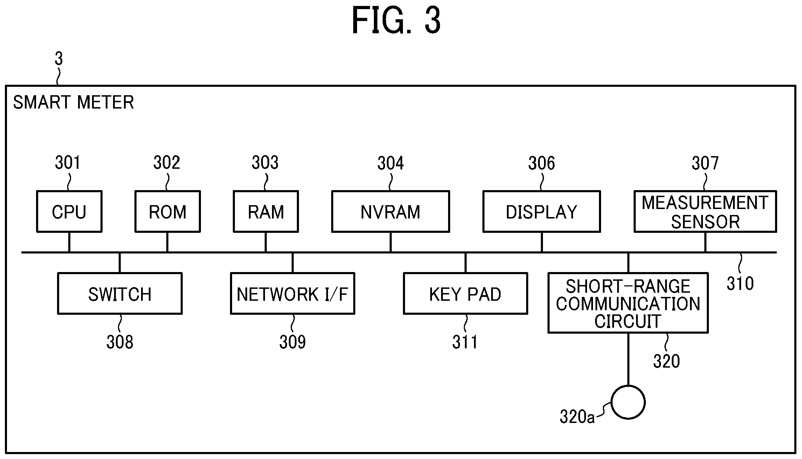

FIG. 3 is a diagram illustrating an example of hardware configuration of the smart meter. As illustrated in FIG. 3, the smart meter 3 is provided with a computer. Still referring to FIG. 3, the smart meter 3 includes a CPU 301, ROM 302, RAM 303, NVRAM 304, display 306, measurement sensor 307, switch 308, network I/F 309, keypad 311, touch panel 312, short-range communication circuit 220, and antenna 220a for the short-range communication circuit 220.

The CPU 301 controls entire operation of the smart meter 3. The ROM 302 stores a program for executing the CPU 301 such as an IPL. The RAM 303 is used as a work area for the CPU 301. The NVRAM (Non-Volatile RAM) 304 is a non-volatile memory that stores and reads various data such as the program. The display 306 displays various information such as cursors, menus, windows, characters, or images.

The measurement sensor 307 measures electricity provided or consumed by the smart meter 3. The switch 308 is turned on to close, or turned off to open, the connections in an electric circuit to cause the electric current flow or stop in the electric circuit.

The network I/F 309 is an interface for data transmission using the communication network 100 such as the Internet including the blockchain network 90. The keypad 311 is an example of input means provided with a plurality of keys for inputting or selecting characters, numerals, or various instructions. The short-range communication circuit 320 is a communication circuit that enables communication based on short-range wireless technology such as NFC and BLUETOOTH. The bus line 310 is an address bus or a data bus, which electrically connects the components illustrated in FIG. 3 such as the CPU 301.

### Hardware configuration of intermediary server

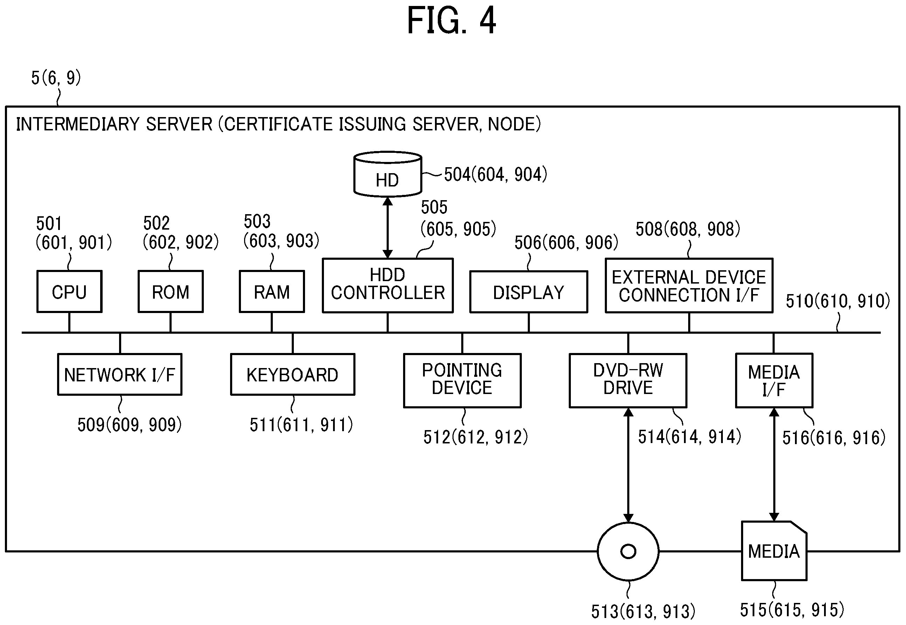

FIG. 4 is a diagram illustrating a hardware configuration of the intermediary server. Hardware components of the intermediary server 5 are designated by reference numerals in 500 series. As illustrated in FIG. 4, the intermediary server 5 is implemented by a computer. Still referring to FIG. 4, the intermediary server 5 includes a CPU 501, ROM 502, RAM 503, hard disk (HD) 504, hard disk drive (HDD) controller 505, display 506, external device connection interface (I/F) 508, network I/F 509, bus line 510, keyboard 511, pointing device 512, Digital Versatile Disk Rewritable (DVD-RW) drive 514, and media I/F 516.

The CPU 501 controls entire operation of the intermediary server 5. The ROM 502 stores a control program for executing the CPU 501, such as an IPL. The RAM 503 is used as a work area for the CPU 501. The HD 504 stores various data such as the program. The HDD controller 505 controls reading or writing of various data with respect to the HD 504 under control of the CPU 501. The display 506 displays various information such as cursors, menus, windows, characters, or images. The external device connection I/F 508 is an interface that connects to various external devices. Examples of the external devices include, but not limited to, a universal serial bus (USB) memory and a printer. The network I/F 509 is an interface that controls communication of data through the communication network 100. The bus line 510 is an address bus, a data bus or the like, which electrically connects the elements illustrated in FIG. 4 such as the CPU 501.

The keyboard 511 is one example of input means provided with a plurality of keys for allowing a user to input characters, numerals, or various instructions. The pointing device 512 is an example of input means that allows a user to select or execute various instructions, select a target for processing, or move a cursor. The DVD-RW drive 514 reads and writes various data from and to a DVD-RW 513, which is an example of a removable storage medium. In alternative to the DVD-RW, any recording medium may be used such as a DVD-R, Blu-ray Disc (Registered Trademark), etc. The media I/F 516 controls reading and writing (storing) of data from and to a recording medium 515 such as a flash memory.

### Hardware Configuration of Certificate Issuing Server

FIG. 4 is a diagram illustrating a hardware configuration of the certificate issuing server. Hardware components of the certificate issuing server 6 are designated by reference numerals in 600 series. As illustrated in FIG. 4, the certificate issuing server 6 is implemented by a computer. As illustrated in FIG. 4, since the certificate issuing server 6 has the same configuration as the intermediary server 5, description of hardware configuration thereof is omitted.

### Hardware Configuration of Node

FIG. 4 is a diagram illustrating an example of hardware configuration of the node. Hardware components of the node 9 are designated by reference numerals in 900 series. As illustrated in FIG. 4, the node 9 is implemented by a computer. As illustrated in FIG. 4, since the node 9 has the same configuration as the intermediary server 5, description of hardware configuration thereof is omitted.

### Hardware Configuration of Image Processing Apparatus

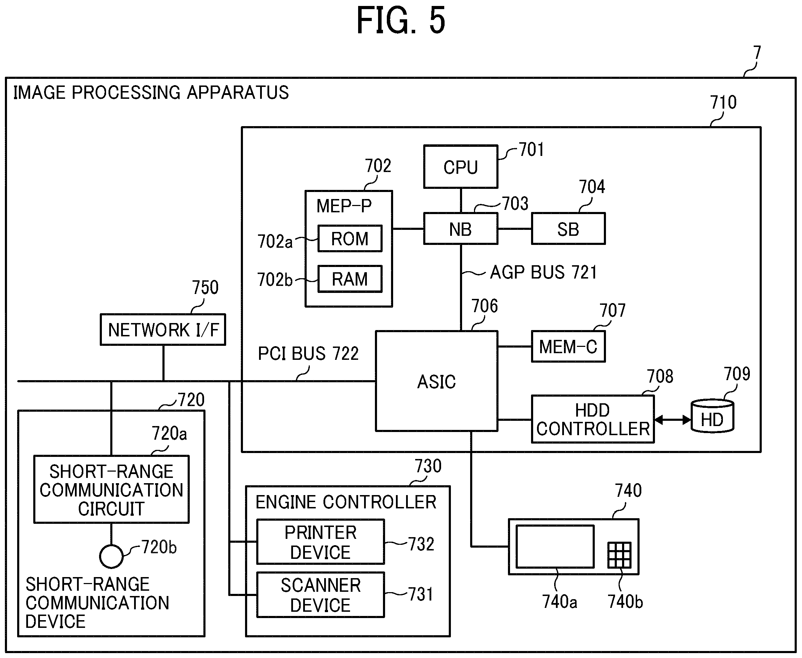

FIG. 5 is a diagram illustrating a hardware configuration of the image processing apparatus. As illustrated in FIG. 5, the image processing apparatus 7 includes a controller 710, a short-range communication device 720, an engine controller 730, a control panel 740, and a network I/F 750. The controller 710 includes a CPU 701 as a main processor, a system memory (MEM-P) 702, a northbridge (NB) 703, a southbridge (SB) 704, an Application Specific Integrated Circuit (ASIC) 706, a local memory (MEM-C) 707 as a storage area, a HDD controller 708, and a HD 709 as a storage area. The NB 703 and the ASIC 706 are connected by an Accelerated Graphics Port (AGP) bus 721.

Of those, the CPU 701 is a processor that controls entire operation of the image processing apparatus 7. The NB 703 is a bridge for connecting the CPU 701 to the MEM-P 702, the SB 704, and the AGP bus 721, and includes a memory controller that controls reading from and writing to the MEM-P702, a peripheral component interconnect (PCI) master, and an AGP target. The MEM-P 702 includes a ROM 702a, which is a memory for storing programs and data for implementing each function of the controller 710, and a RAM 702b used as a memory for deploying programs or data or a memory for rendering print data. The SB 704 is a bridge for connecting the NB 703 to the PCI bus 722 and peripheral devices. The ASIC 706 is an integrated circuit (IC) dedicated to image processing with hardware elements for image processing, and serves as a bridge that connects the AGP bus 721, the PCI bus 722, the HDD controller 708, and the MEM C707. The ASIC 706 includes a PCI target, an AGP master, an arbiter (ARB) serving as a core of the ASIC 706, a memory controller that controls the MEM-C 707, a plurality of direct memory access controllers (DMACs) that rotates image data by such as hardware logic, and a PCI unit for performing data transmission between a scanner device 731 and a printer device 732 via the PCI bus 722. The ASIC 706 may be connected to a universal serial bus (USB) interface, or the Institute of Electrical and Electronics Engineers 1394 (IEEE1394) interface.

The MEM-C 707 is a local memory used as a buffer for an image to be copied or a buffer for coding. The HD 709 is a storage for storing image data, font data used in printing, and forms. The HDD controller 708 controls reading or writing of various data with respect to the HD 709 under control of the CPU 701. The AGP bus 721 is a bus interface for a graphics accelerator card, which has been proposed to accelerate graphics processing. Through directly accessing the MEM-P 702 by high-throughput, processing speed of the graphics accelerator card is improved. The short-range communication device 720 includes a short-range communication circuit 720a and an antenna 720b for the short-range communication circuit 720a. The short-range communication circuit 720a is a communication circuit for near field communication that communicates in compliance with the NFC (near field communication), the BLUETOOTH (Registered Trademark), millimeter wave wireless communication, QR code (Registered Trademark), visible light, environmental sound, or ultrasonic waves.

The engine controller 730 includes the scanner device 731 and the printer device 732. The scanner device 731 and the printer device 732 each performs various image processing, such as error diffusion or gamma conversion. The control panel 740 includes a panel display device 740a and an operation device 740b. The panel display device 740a is implemented by, for example, a touch panel that displays current settings or a selection screen to receive an input from an operator. The operation device 740b includes a numeric keypad that receives set values of various image forming parameters such as image density parameter and a start key that receives an instruction for starting copying. The panel display device 740a is an example of a display device. The controller 710 controls entire operation of the image processing apparatus 7, and controls, for example, rendering, communication, input from the control panel 740, etc. The network I/F 750 is an interface for communication of data through the communication network 100. The short-range communication circuit 720a and the network I/F 750 are electrically connected to the ASIC 706 via the PCI bus 722.

Any of the above-described programs may be stored in a computer-readable recording medium as a file in an installable format or an executable format for distribution. Examples of the recording medium include a CD-R (Compact Disc Recordable), a DVD (Digital Versatile Disk), a Blu-ray Disc, an SD card, and a USB memory. In addition, the recording medium can be provided domestically or abroad as a program product. For example, the node 9 according to the embodiment executes the program, according to the present invention, to implement a method according to the present invention.

### Functional Configuration

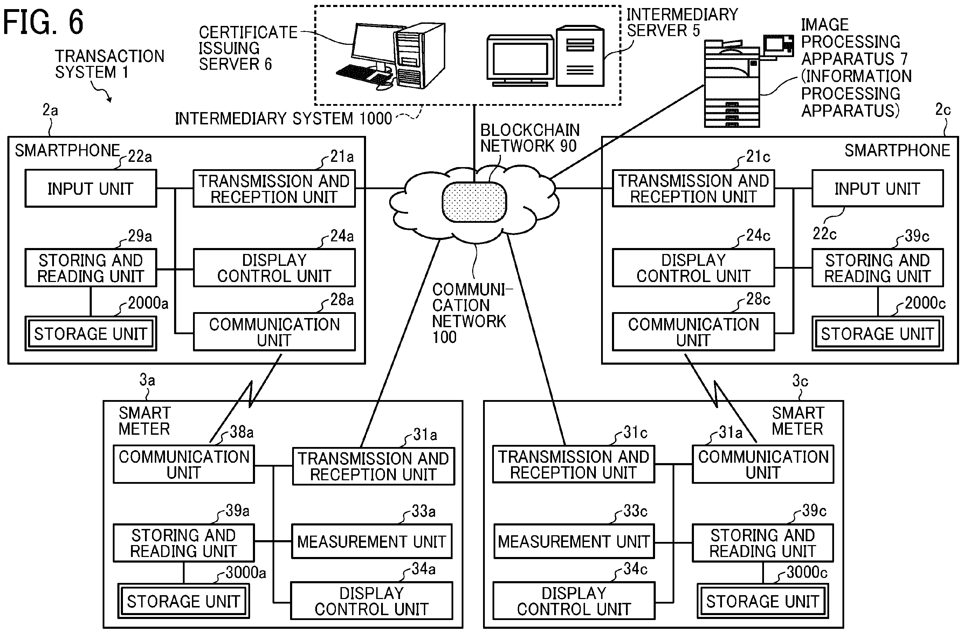

Next, referring to FIGs. 6 to 8, a functional configuration of each terminal and device of the transaction system 1 is described. FIG. 6 is a block diagram illustrating a functional configuration of the smartphone and the smart meter in the transaction system.

### Functional Configuration of Smartphone 2a

As illustrated in FIG. 6, the smartphone 2a includes a transmission and reception unit 21a, an input unit 22a, a display control unit 24a, a communication unit 28a, and a storing and reading unit 29a. These units are functions or means implemented by or caused to function by operating one or more hardware components illustrated in FIG. 2 in cooperation with instructions of the CPU 201 according to the program for smartphone loaded from the EEPROM 204 to the RAM 203.

Further, the smartphone 2a includes a storage unit 2000a implemented by the ROM 202, the RAM 203, and the EEPROM 204 illustrated in FIG. 2.

### (Each Functional Element of Smartphone 2a)

The transmission and reception unit 21a of the smartphone 2a, which is implemented mainly by instructions of the CPU 201 with respect to the long-range communication circuit 212, controls transmission or reception of various data (or information) to or from other device (for example, the intermediary server 5) via the communication network 100.

The input unit 22a, which is mainly implemented by instructions of the CPU 201 with respect to the touch panel 221, receives various selections or inputs from the user.

The display control unit 24a, which is mainly implemented by instructions of the CPU 201, controls the display 218 to display various images. The display control unit 24a further provides a web browser function.

The communication unit 28a, which is mainly implemented by instructions of the CPU 201 with respect to the short-range communication circuit 220, communicates various data with a communication unit 38a, to be described later, of the smart meter 3a. In the case of wired communication, the smartphone 2a is connected to the smart meter 3a via a communication cable to communicate data.

The storing and reading unit 29a, which is mainly implemented by instructions of the CPU 201, stores various data (or information) in the storage unit 2000a and reads various data (or information) from the storage unit 2000a.

### Functional Configuration of Smartphone 2c

As illustrated in FIG. 6, the smartphone 2c includes a transmission and reception unit 21c, an input unit 22c, a display control unit 24c, a communication unit 28c, and a storing and reading unit 29c. These units are functions or means implemented by or caused to function by operating one or more hardware components illustrated in FIG. 2 in cooperation with instructions of the CPU 201 according to the program for smartphone loaded from the EEPROM 204 to the RAM 203.

Further, the smartphone 2c includes a storage unit 2000c implemented by the ROM 202, the RAM 203, and the EEPROM 204 illustrated in FIG. 2.

The respective units of the smartphone 2c (transmission and reception unit 21c, input unit 22c, display control unit 24c, communication unit 28c, and storing and reading unit 29c) are substantially the same in function to corresponding units of the smartphone 2a (transmission and reception unit 21a, input unit 22a, display control unit 24a, communication unit 28a, and storing and reading unit 29a), so that description thereof is omitted. Similarly to the smartphone 2c, the smartphone 2b is substantially the same in functional units to the smartphone 2a, but FIG. 5 omits the smartphone 2b as the smartphone 2b is not referred below.

### Functional Configuration of Smart Meter 3a

As illustrated in FIG. 6, the smart meter 3a includes a transmission and reception unit 31a, a measurement unit 33a, a display control unit 34a, a communication unit 38a, and a storing and reading unit 39a. These units are functions or means implemented by or caused to function by operating one or more hardware components illustrated in FIG. 3 in cooperation with instructions of the CPU 301 according to the program for smart meter loaded from the NVRAM 304 to the RAM 303.

Further, the smart meter 3a includes a storage unit 3000a implemented by the ROM 302, the RAM 303, and the NVRAM 304 illustrated in FIG. 3.

### (Each Functional Element of Smart Meter 3a)

The transmission and reception unit 31a of the smart meter 3a, which is implemented mainly by instructions of the CPU 301 with respect to the network I/F 309, controls transmission or reception of various data (or information) to or from other device (for example, the intermediary server 5) via the communication network 100.

The measurement unit 33a, which is implemented mainly by instructions of the CPU 301 with respect to the measurement sensor 307, measures the amount of electricity generated by the power generator 4a.

The display control unit 34a, which is mainly implemented by the instructions of the CPU 301, controls the display 306 to display various images.

The communication unit 38a, which is mainly implemented by the instructions of the CPU 301 with respect to the short-range communication circuit 320, communicates various data with the communication unit 28a of the smartphone 2a. In the case of wired communication, the smart meter 3a is connected to the smart meter 3a via a communication cable to communicate data with other device.

The storing and reading unit 39a, which is mainly implemented by instructions of the CPU 301, stores various data (or information) in the storage unit 3000a and reads various data (or information) from the storage unit 3000a.

### Functional Configuration of Smart Meter 3c

As illustrated in FIG. 6, the smart meter 3c includes a transmission and reception unit 31c, a measurement unit 33c, a display control unit 34c, a communication unit 38c, and a storing and reading unit 39c. These units are functions or means implemented by or caused to function by operating one or more hardware components illustrated in FIG. 3 in cooperation with instructions of the CPU 301 according to the program for smart meter loaded from the NVRAM 304 to the RAM 303.

Further, the smart meter 3a includes a storage unit 3000c implemented by the ROM 302, the RAM 303, and the NVRAM 304 illustrated in FIG. 3.

The respective units of the smart meter 3c (transmission and reception unit 31c, measurement unit 33c, display control unit 34c, communication unit 38c, and storing and reading unit 39c) are substantially the same in function to corresponding units of the smart meter 3a (transmission and reception unit 31a, measurement unit 33a, display control unit 34a, communication unit 38a, and storing and reading unit 39a), so that description thereof is omitted. Similarly to the smart meter 3c, the smart meter 3b is substantially the same in functional units to the smart meter 3a, but FIG. 6 omits the smart meter 3b as the smart meter 3b is not referred in the following description.

### Functional Configuration of Intermediary Server 5

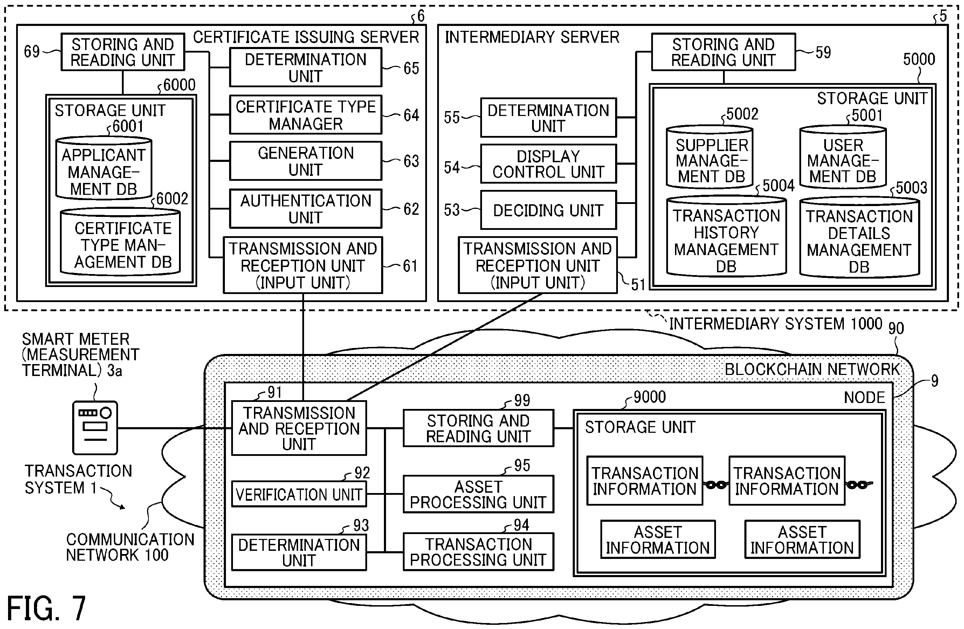

FIG. 7 is a block diagram illustrating a functional configuration of the intermediary server, the certificate issuing server, and the node in the transaction system. As illustrated in FIG. 7, the intermediary server 5 includes a transmission and reception unit 51, a deciding unit 53, a display control unit 54, a determination unit 55, and a storing and reading unit 59. These units are functions or means implemented by or caused to function by operating one or more hardware components illustrated in FIG. 4 in cooperation with instructions of the CPU 501 according to the program for the intermediary server loaded from the HD 504 to the RAM 503.

Further, the intermediary server 5 includes a storage unit 5000 implemented by the ROM 502 and the HD 504 illustrated in FIG. 4.

### (User Management Table)

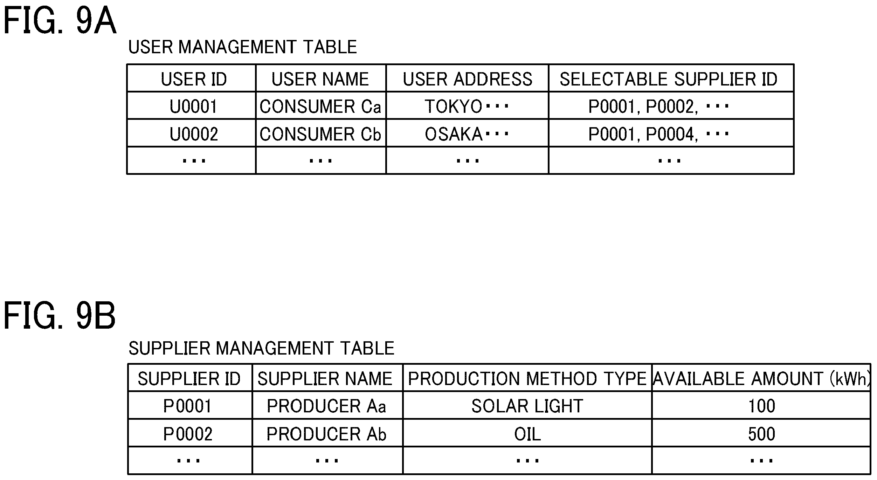

FIG. 9A is a conceptual diagram illustrating a user management table. The user management table is a table used by the intermediary agent Da to manage each user such as a consumer of electricity. The storage unit 5000 includes a user management DB 5001, implemented by a user management table as illustrated in FIG. 9A. The user management table stores a user ID, a user name, a user's address (or location where the user resides), and a selectable supplier ID in association.

Of these items, the user ID is an example of user identification information for identifying the user of an asset, such as the consumer Ca of electricity. The selectable supplier ID is an example of supplier identification information for identifying a supplier, such as a producer of electricity, which can be selected by the user identified with the user ID. For example, if the user's address is in Tokyo, the selectable suppliers are limited to those suppliers that have addresses in or around Tokyo.

### (Supplier Management Table)

FIG. 9B is a conceptual diagram illustrating a supplier management table. The supplier management table is a table used by the intermediary agent Da to manage each supplier such as a producer of electricity. The storage unit 5000 stores a supplier management DB 5002, which is implemented by the supplier management table as illustrated in FIG. 9B. The supplier management table includes a supplier ID, a supplier name, a production method type of the supplier for an asset such as electricity, and an amount of asset that can be supplied, in association.

Of these items, the supplier ID is an example of supplier identification information for identifying the supplier of asset such a producer of electricity. The production method type is based on a type of energy resource used to produce the asset. As described above, example types of the production method include methods using solar light, wind power, biomass, geothermal power, hydraulic power, petroleum, coal, liquefied natural gas, and nuclear power. The above-described types of production method may be classified into one or more groups, such as the group of production methods using renewable energy or the group of production methods using such as fossil fuel. The amount that can be supplied is an amount of assets that can be supplied by a supplier, such as producer, for a certain time duration (or a certain time period). For example, the amount of assets that can be supplied is an amount of electric energy (kWh).

### (Transaction Details Management Table)

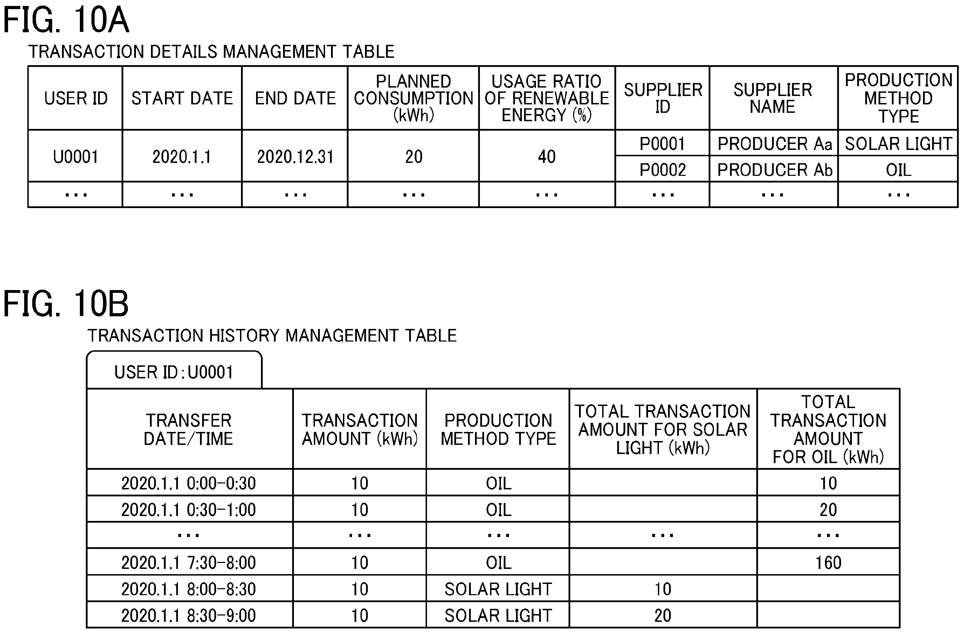

FIG. 10A is a conceptual diagram illustrating a transaction details management table. The transaction details management table is a table used for managing transaction details of asset, set by the user such as the consumer Ca. The storage unit 5000 includes a transaction details management DB 5003, which is implemented by the transaction details management table as illustrated in FIG. 10A. The transaction details management table includes information on details of transactions. Specifically, the transaction details management table includes a user ID, usage start date, usage end date, planned usage amount, renewable energy usage ratio, supplier ID, a supplier name, and production method type of asset, in association. The same data items stored both in the tables of FIGs. 9A and 9B, such as the user ID, are each designated with the same item name.

Of these, the usage start date is information indicating the date when the user such as the consumer Ca starts using the asset such as electricity. The usage end date is information indicating the date when the user ends using the asset such as electricity. The planned usage amount is the amount of asset that the user plans to use for a certain time duration (or a certain time period), and can be expressed in terms of electric energy (kWh). The renewable energy usage ratio is information indicating a ratio (%) of assets produced from renewable energy such as solar light, with respect to total amount of assets, such as electricity, to be used by the user such as the consumer Ca.

### (Transaction History Management Table)

FIG. 10B is a conceptual diagram illustrating a transaction history management table. The transaction history management table is a table for managing, for each user, a history of transactions that the intermediary server 5 intermediates transfer of asset, which is obtained from the supplier such as the producer. The storage unit 5000 includes a transaction history management DB 5004, which is implemented by the transaction history management table as illustrated in FIG. 10B. The transaction history management table manages transaction history information, specifically, the transfer date and time, the transaction amount, the production method type, and the total transaction amount by production method type, in association. In this example, a type of resource (an energy resource) used to produce asset can be referred to as a "production method type" indicating that a method of producing asset using a predetermined type of resource. For example, when the asset is electricity, the "production method type" corresponds to a method of producing electricity from such as solar light. Although this embodiment describes a case in which one type of production method uses solar light and another type of production method uses oil, any other type of production method may be used, such as a type of production method using wind power or a type of production method using coal. Further, the above-described types of production method may be classified into one or more groups, such as the group of production method types using renewable energy or the group of production method types using fossil fuel.

Of the transaction history information, the same data items stored in the tables of FIGs. 9A and 9B, such as the user ID, are each designated with the same item name. In this example, the transfer date and time indicates the date and time when ownership of asset is transferred, specifically, the date and time when the intermediary server 5 transfers the ownership of the asset acquired from the supplier, such as the producer, to the user such as the consumer Ca. The transaction amount indicates an amount of asset that the intermediary server 5 acquires its ownership from the supplier and provides the acquired ownership to the user. The amount of asset is represented by, for example, electric energy (kWh). The total transaction amount indicates a total amount of assets, which are produced by a specific production method and allocated to a user such as the consumer Ca for a certain duration of time (or a certain period of time), and is expressed in total electric energy (kWh), for example. The intermediary server 5 refers to the transaction history management DB 5004 to determine a production method type of asset to be allocated to the user such as the consumer Ca. For example, when a ratio of electricity having been produced using renewable energy is set to 40 by the consumer Ca, the intermediary server 5 refers to the total transaction amount in the transaction history management DB 5004, to determine a production method type of asset to be provided to the consumer Ca. Since the planned usage amount (for example, 20kWh) illustrated in FIG. 10A is a planned usage amount for every hour, the transaction amount will be half the planned usage amount (for example, 10kWh), when transferring the ownership of asset is performed every 30 minutes.

Although this embodiment describes a case in which one type of production method uses solar light and another type of production method uses oil, any other type of production method may be used, such as a type of production method using wind power or a type of production method using coal. Further, the above-described types of production method may be classified into one or more groups, such as the group of production method types using renewable energy or the group of production method types using fossil fuel. Furthermore, the production method type is based on a type of asset production process. The type of asset production process indicates a case in which any one of processes in producing the asset such as electricity differs. In one example, even when the same energy resource, such as solar, is used to produce electricity, there are one method for producing electricity using solar light and other method for producing electricity using solar heat. In another example, as another type of production method of asset, there are one method for producing electricity using a turbine, and other method for producing electricity without using a turbine.

### (Each Functional Unit of Intermediary Server 5)

Next, each function unit of the intermediary server 5 is described in detail with reference to FIG. 7. The transmission and reception unit 51 of the intermediary server 5, which is implemented mainly by instructions of the CPU 501 with respect to the network I/F 509, controls transmission or reception of various data (or information) to or from other device (for example, the smartphone 2a, 2c) via the communication network 100. The transmission and reception unit 51 also serves as an input unit that receives the transaction details, described later, from the smartphone 2c.

The deciding unit 53, which is implemented by the instructions of the CPU 501, determines asset information indicating such as an ownership of the asset (the asset that the intermediary server 5 intermediates transfer of ownership) to be transferred to the user. It is assumed that transfer of asset, produced by a specific type of production method, is intermediated for a specific user such as the consumer Ca. In such case, the deciding unit 53 determines asset information on such asset, based on "history of transactions of asset produced by the specific type of production method for the specific user" stored in the transaction history management DB 5004, and "renewable energy usage ratio" previously stored in the transaction details management DB 5003. Specifically, when the renewable energy usage ratio for the consumer Ca is set to 40(%), the deciding unit 53 refers to the total transaction amount in the transaction history management DB 5004, to determine to transfer ownership of asset information indicating the asset produced from renewable energy, from the intermediary agent Da managing the intermediary server 5 to the consumer Ca, until the renewable energy usage ratio reaches 40(%).

The display control unit 54, which is mainly implemented by the instructions of the CPU 501, controls the display 506 to display various images, or controls the display 218 of the smartphone 2 to display various images via the communication network 100. In this case, the smartphone 2 displays various images using functions provided by the web browser of the display control unit 24 of the smartphone 2. The display control units 24a and 24c may be collectively referred to as the display control unit 24.

The determination unit 55, which is implemented by the instructions of the CPU 501, makes various determinations.

The storing and reading unit 59, which is mainly implemented by the instructions of the CPU 501, stores various data (or information) in the storage unit 5000 and reads various data (or information) from the storage unit 5000.

### Functional Configuration of Certificate Issuing Server 6

As illustrated in FIG. 7, the certificate issuing server 6 includes a transmission and reception unit 61, an authentication unit 62, a generation unit 63, a certificate type manager 64, a determination unit 65, and a storing and reading unit 69. These units are functions or means implemented by or caused to function by operating one or more hardware components illustrated in FIG. 4 in cooperation with instructions of the CPU 601 according to the program for the certificate issuing server loaded from the HD 604 to the RAM 603.

Further, the certificate issuing server 6 includes a storage unit 6000 implemented by the ROM 602 and the HD 604 illustrated in FIG. 4.

### (Applicant Management Table)

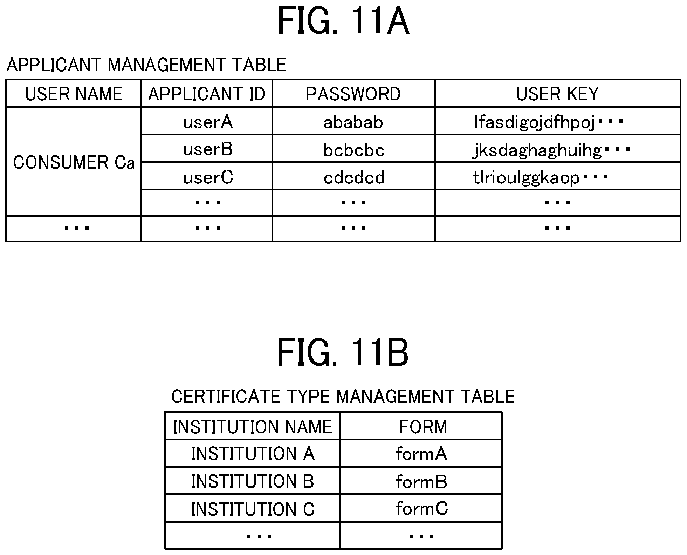

FIG. 11A is a conceptual diagram illustrating an applicant management table. The applicant management table is a table used by the intermediary agent Da to manage an applicant of a production method certificate. The storage unit 6000 stores an applicant management DB 6001, implemented by an applicant management table as illustrated in FIG. 11A. The applicant management table stores a user name, an applicant ID, a password, and a selectable user key, in association.

Of these items, the applicant ID and the password are an example of applicant identification information for identifying an applicant who applies for issuance of a production method certificate. The application management table stores a plurality of applicant IDs in association with one user name. In this disclosure, the applicant is, for example, a user who has authority to apply for a production method certificate, from among members of an entity such as a producer or a consumer of electricity. Only one applicant ID may be associated with one user name. Further, a user key is key information for the applicant to issue a production method certificate using the blockchain network 90.

### (Certificate Type Management Table)

FIG. 11B is a conceptual diagram illustrating a certificate type management table. The certificate type management table is a table for managing forms of a certificate to be issued by a national or local public institution. The storage unit 6000 stores a certification type management DB 6002, implemented by a certification type management table as illustrated in FIG. 11B. The certificate type management table stores an institution name indicating an authority that issues a certificate, and a form of the certificate to be issued by the certificate issuing authority, in association.

It is assumed that the intermediary agent Da has been approved in advance by the certificate issuing authority such as the national institution. The intermediary agent Da manages the forms of the certificate approved by each certificate issuing authority, with the certificate type management table.

### (Each Functional Unit of Certificate Issuing Server 6)

Next, each function unit of the certificate issuing server 6 is described in detail with reference to FIG. 7. The transmission and reception unit 61 of the certificate issuing server 6, which is mainly implemented by instructions of the CPU 601 with respect to the network I/F 609, transmits and receives various data (or information) to and from other apparatuses or terminals (for example, the image processing apparatus 7) via the communication network 100. The transmission and reception unit 61 also serves as an input unit that receives a certificate issuance request, to be described later, from the image processing apparatus 7.

The authentication unit 62, which is implemented by instructions of the CPU 601, authenticates an applicant E who requests issuance of a production method certificate based on issuance request information received by the transmission and reception unit 61.

The generation unit 63, which is implemented by instructions of the CPU 601, generates a production method certificate to be provided to the applicant E based on the transaction information and the asset information.

The certification type manager 64, which is mainly implemented by instructions of the CPU 601, manages forms of a certification for each issuing authority that issues a production method certificate.

The determination unit 65, which is implemented by instructions of the CPU 601, performs various determinations.

The storing and reading unit 69, which is implemented mainly by the instructions of the CPU 601, stores various data (or information) in the storage unit 6000, and reads out various data (or information) from the storage unit 6000.

### Functional Configuration of Node 9

As illustrated in FIG. 7, the node 9 includes a transmission and reception unit 91, a verification unit 92, a determination unit 93, a transaction processing unit 94, an asset processing unit 95, and a storing and reading unit 99. These units are functions or means implemented by or caused to function by operating one or more hardware components illustrated in FIG. 4 in cooperation with instructions of the CPU 901 according to the program for the node loaded from the HD 904 to the RAM 903.

The node 9 further includes a storage unit 9000, which is implemented by the ROM 902 and the HD 904 illustrated in FIG. 4. FIG. 7 illustrates a state in which transaction information is connected like a chain. The node 9 further stores asset information generated based on the transaction information. The transaction information and the asset information are stored in each node.

### (Each Functional Unit of Node 9)

Next, each functional unit of the node 9 is described in detail with reference to FIG. 7. The transmission and reception unit 91 of the node 9, which is implemented mainly by instructions of the CPU 901 with respect to the network I/F 909, controls transmission or reception of various data (or information) to or from other node of the blockchain network 90 on the communication network 100. The transmission and reception unit 91 transmits or receives various data (or information) between the transmission and reception unit 31a of the smart meter 3a and the transmission and reception unit 51 of the intermediary server 5. Although the smart meter 3b is not illustrated in FIG. 7, the transmission and reception unit 91 actually transmits or receives various data (or information) to or from the smart meter 3b.

The verification unit 92, which is implemented by the instructions of the CPU 901, verifies the certificate and the provided information. The certificate verification is a process of determining whether or not a target certificate is a certificate of the entity that is registered in advance in the node 9. The verification of the supplier information is a process of determining whether or not all predetermined contents are entered in predetermined format (for example, whether the supplier is entered or the provision time period is entered).

The determination unit 93, which is implemented by the instructions of the CPU 901, makes various determinations.

The transaction processing unit 94, which is implemented by the instructions of the CPU 901, performs processing such as generating transaction information causing generation of asset information and storing the transaction information in the storage unit 9000.

The asset processing unit 95, which is implemented by the instructions of the CPU 901, performs processing such as generating asset information according to the transaction information and storing the asset information in the storage unit 9000.

The storing and reading unit 99, which is mainly implemented by the instructions of the CPU 901, stores various data (or information) in the storage unit 9000 and reads various data (or information) from the storage unit 9000.

### Functional Configuration of Image Processing Apparatus 7

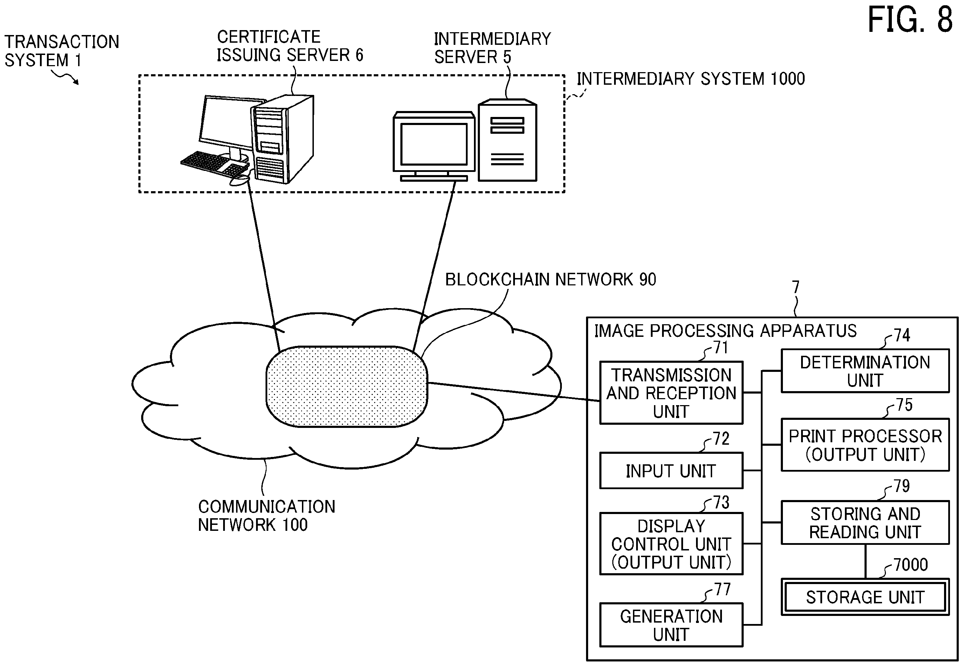

FIG. 8 is a block diagram illustrating a functional configuration of the image processing apparatus in the transaction system. As illustrated in FIG. 8, the image processing apparatus 7 includes a transmission and reception unit 71, an input unit 72, a display control unit 73, a determination unit 74, a print processing unit 75, a generation unit 77, and a storing and reading unit 79. These units are functions or means implemented by or caused to function by operating one or more hardware components illustrated in FIG. 5 in cooperation with instructions of the CPU 701 according to the program for the image processing apparatus loaded from the HD 709 to the RAM 702b.

The image processing apparatus 7 further includes a storage unit 7000 implemented by the ROM 702a and the HD 709, illustrated in FIG. 5.

### (Each Functional Unit of Image Processing Apparatus 7)

Next, each functional unit of the image processing apparatus 7 is described in detail with reference to FIG. 8. The transmission and reception unit 71 of the image processing apparatus 7, which is implemented mainly by instructions of the CPU 701 with respect to the network I/F 909, controls transmission or reception of various data (or information) to or from the certificate issuing server 6 via the communication network 100.

The input unit 72, which is mainly implemented by instructions of the CPU 701 with respect to the control panel 740, receives various selections or inputs from the user.

The display control unit 73, which is implemented mainly by the instructions of the CPU 701, controls the control panel 740 to display various images. For example, the display control unit 73 uses a web browser function to cause the control panel 740 to display a web page created in such as HTML (HyperText Markup Language).

The determination unit 74, which is implemented by instructions of the CPU 701, performs various determinations.

The print processing unit 75, which is mainly implemented by instructions of the CPU 701 with respect to the engine controller 730, executes processing to print image data. The generation unit 77, which is implemented by instructions of the CPU 701, generates issuance request information indicating a request to issue an asset production method certificate.

The storing and reading unit 79, which is implemented mainly by the instructions of the CPU 701, stores various data (or information) in the storage unit 7000, and reads out various data (or information) from the storage unit 7000.

### Processing or Operations

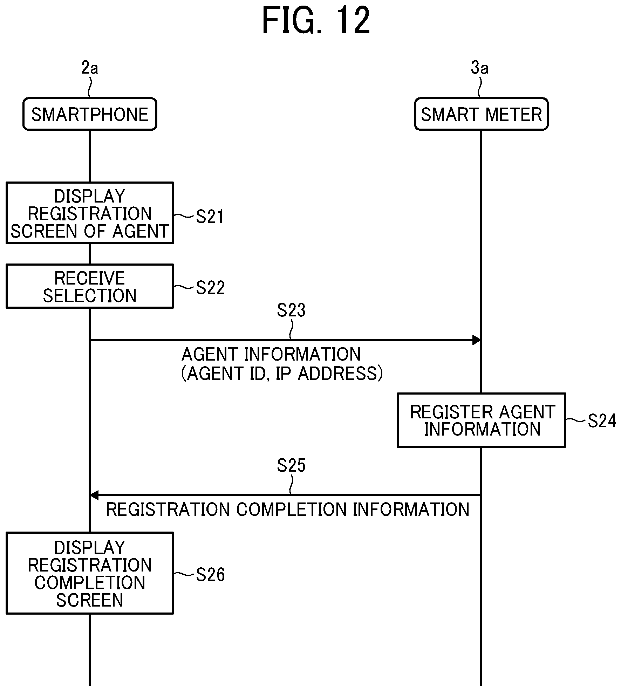

Next, processing or operation according to the present embodiment will be described with reference to FIGs. 12 to 24.

### Registration of Intermediary Agent

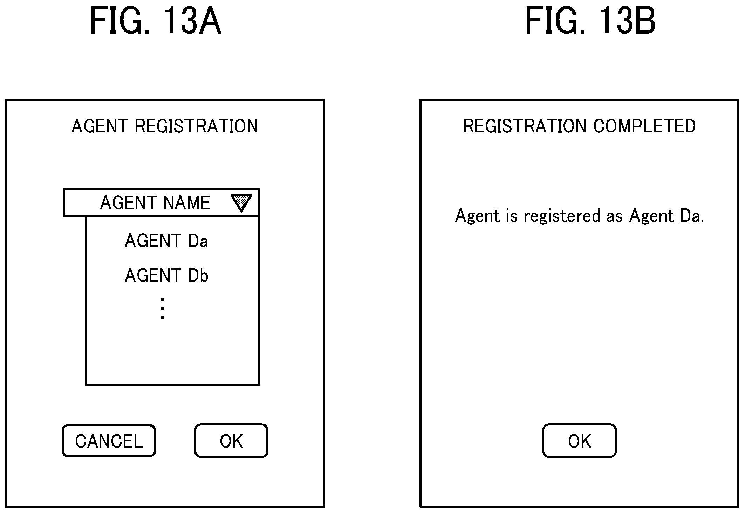

First, referring to FIGs. 12 and 13, processing of registering intermediary agents is described. FIG. 12 is a sequence diagram illustrating processing of registering intermediary agents. FIG. 13A is an illustration of an example intermediary agent registration screen. FIG. 13B is an illustration of an example intermediary agent registration completion screen. The following describes an example case in which the producer Aa registers the intermediary agent Da, from among a plurality of intermediary agents. It is assumed that the producer Aa previously makes a contract with the intermediary agent Da, such that the producer Aa is able to select the intermediary agent Da as described later. The smartphone 2a is previously installed with an application program for registering intermediary agents. This application program manages an intermediary agent ID for identifying the intermediary agent, a name of the intermediary agent, and an internet protocol (IP) address of an intermediary server of the intermediary agent, in association.

As illustrated in FIG. 12, at the smartphone 2a, the display control unit 24a controls the display 218 to display the intermediary agent registration screen illustrated in FIG. 13A (S21). The intermediary agent registration screen displays a pull-down menu, which lists a plurality of intermediary agent names for selecting a particular intermediary agent. The intermediary agent registration screen further includes, at its lower part, an "OK" button to be pressed to confirm the intermediary agent name selected from the pull-down menu, and a "CANCEL" button to be pressed to cancel the selection.

When the producer Aa selects a desired intermediary agent name from the plurality of intermediary agent names and presses the "OK" button, the input unit 22a receives the selection on the intermediary agent (S22). Here, the case where the intermediary agent Da is selected is described.

After the input unit 22a receives the selection, the communication unit 28a transmits information on the selected intermediary agent to the communication unit 38a of the smart meter 3a by short-range wireless communication (S23). The intermediary agent information includes an intermediary agent ID for identifying the selected intermediary agent and an IP address of an intermediary server of the selected intermediary agent. Accordingly, the communication unit 38a of the smart meter 3a receives the intermediary agent information.

Next, at the smart meter 3a, the storing and reading unit 39a registers the intermediary agent information in the storage unit 3000a . Then, the communication unit 38a transmits registration completion information indicating that registration of the intermediary agent is completed to the smartphone 2a . Accordingly, the communication unit 28a of the smartphone 2a receives the registration completion information.

Next, at the smartphone 2a, the display control unit 24a controls the display 218 to display the registration completion screen as illustrated in FIG. 13B (S26). The registration completion screen displays a message indicating that registration of the intermediary agent is completed. The registration completion screen further includes an "OK" button to be pressed to close the screen being displayed. When the producer Aa presses the "OK" button, the registration completion screen is closed.

The processing of registering the intermediary agent thus ends.

### Registration Processing of Transaction Details

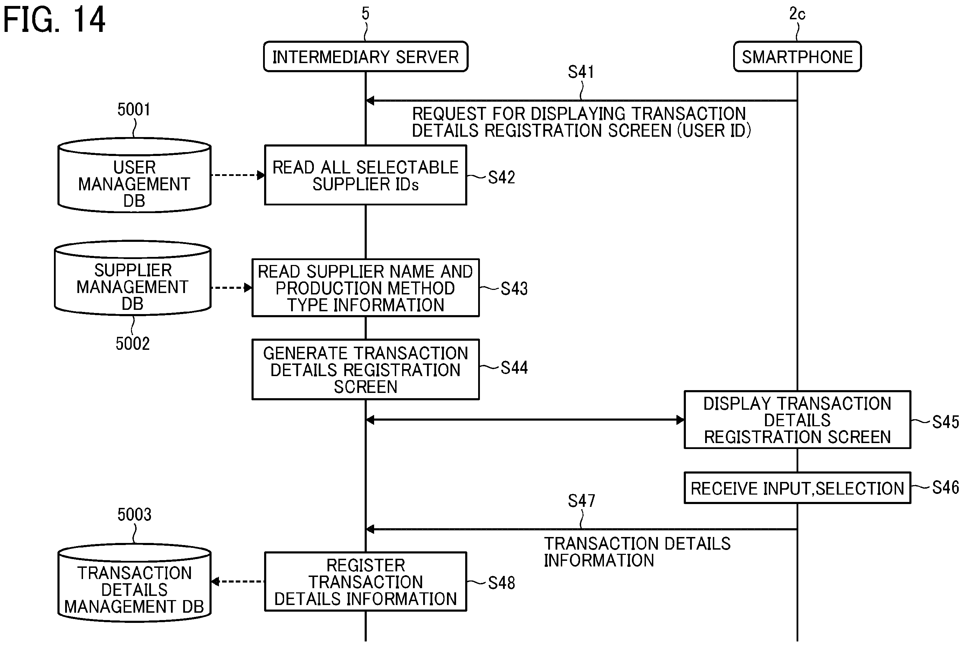

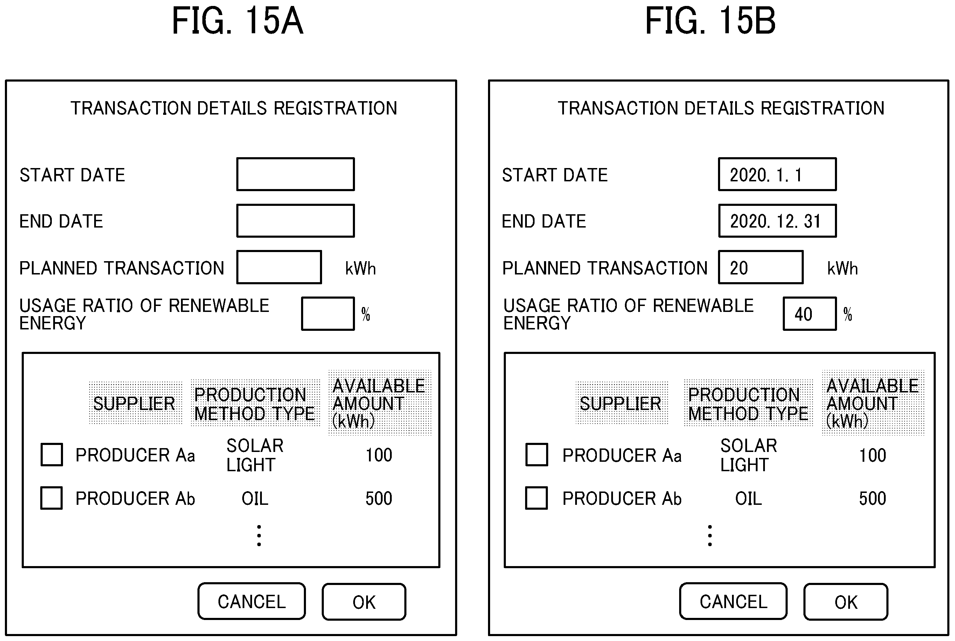

Next, referring to FIGs. 14 and 15, processing of registering asset transaction details is described. FIG. 14 is a sequence diagram illustrating processing of registering transaction details of assets. FIG. 15A is an illustration of an example transaction details registration screen before information is entered or selected. FIG. 15B is an illustration of an example transaction details registration screen after information is entered or selected. The following describes the example case in which the consumer Ca registers the transaction details of electricity, as an asset, to the intermediary server 5 using the smartphone 2c.

As illustrated in FIG. 14, the transmission and reception unit 21c of the smartphone 2c transmits a request for displaying a transaction details registration screen to the intermediary server 5 via the communication network 100 (S41). The display request includes a user ID for identifying the consumer Ca as a user who is the request source. Accordingly, the transmission and reception unit 51 of the intermediary server 5 receives the display request. The user ID is an example of user identification information. Examples of the user identification information include a number for uniquely identifying an individual, which may be designated by a local public institution, such as a my number in Japan, and a telephone number of the individual or the company.

Next, at the intermediary server 5, the storing and reading unit 59 searches the user management DB 5001 (see FIG. 9A) using the user ID received at S41 as a search key, to read out all selectable supplier IDs associated with the user ID (S42). Further, the storing and reading unit 59 searches the supplier management DB 5002 using each supplier ID read at S42 as a search key, to read out various information associated with the supplier (supplier name, production method type information, and amount that can be supplied) (S43). The display control unit 54 generates a transaction details registration screen as illustrated in FIG. 15A based on the information read at S43 (S44). Accordingly, at the smartphone 2c, the display control unit 24c uses its web browser function to display, on the display 218 of the smartphone 2c, the transaction details registration screen illustrated in FIG. 15A that is generated by the intermediary server 5 (S45). The transaction details registration screen includes a plurality of fields (usage time period of asset (in this case, electricity), usage end date of asset, planned usage amount of asset, and renewable energy usage ratio), and a plurality of check boxes each for selecting a supplier of the asset. The transaction details registration screen further includes, at its bottom, an "OK" button to be pressed to confirm the transaction details such as the entered items of the input fields and the checked boxes, and a "CANCEL" button to be pressed to cancel all the transaction details without being confirmed.

Here, the consumer Ca operates the touch panel of the smartphone 2c to enter any desired numerical value in each input field. The consumer Ca further checks a check box of any desired supplier. When the consumer Ca presses the "OK" button, the input unit 22c receives the entered and checked items as the transaction details (S46). The renewable energy usage ratio indicates a ratio of renewable energy in use, to total energy in use to produce electricity that the consumer Ca wants to acquire.

Here, the consumer Ca selects the producer Aa that produces electricity from solar light as energy for production. However, since the producer Aa does not produce any electricity at night, the consumer Ca additionally selects the producer Ab that produces electricity from oil, in consideration of replacing with another type of energy. The renewable energy usage ratio is set to 40%.

Next, the transmission and reception unit 21c of the smartphone 2c transmits transaction details information indicating the entered and selected items to the intermediary server 5 via the communication network 100 (S47). Accordingly, the transmission and reception unit 51 of the intermediary server 5 receives the transaction details information.

Next, at the intermediary server 5, the storing and reading unit 59 stores, in the transaction details management DB 5003 (see FIG. 10A), the transaction details information received at S47 in association with the user ID received at S41 (S48).

The processing of registering transaction details thus ends.

### Processing of setting the intermediary agent as an owner of the asset

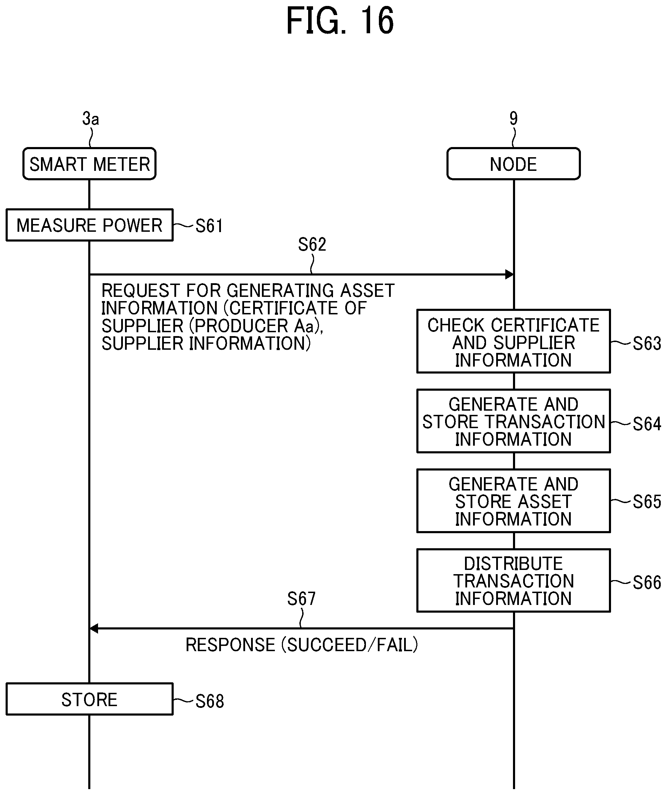

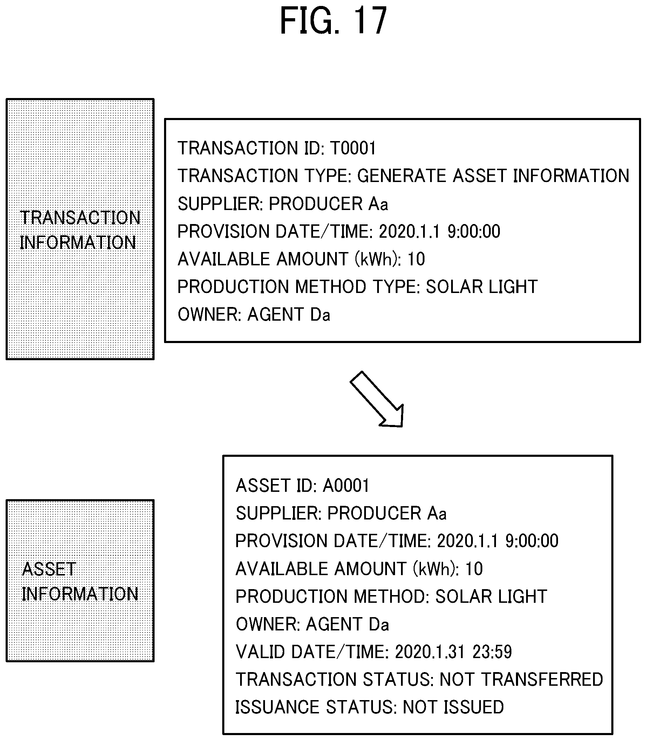

Referring now to FIGs. 16 and 17, processing of setting the intermediary agent as an owner of the asset provided by the supplier is described. FIG. 16 is a sequence diagram illustrating processing of setting the intermediary agent as an owner of the asset provided by the supplier. FIG. 17 is a conceptual diagram illustrating transaction information and asset information. The following describes the example case in which the smart meter 3a of the producer Aa requests the node 9a to set the intermediary agent as an owner of the asset.

As illustrated in FIG. 16, the measurement unit 33a measures electricity supplied from the power generator 4a to the power grid network 10 (S61). The transmission and reception unit 31a of the smart meter 3a transmits a request for generating asset information to the node 9a of the blockchain network 90 every predetermined time (for example, every 30 minutes) (S62). This request includes an electronic certificate certifying that the producer Aa is a legitimate registered supplier, and supplier information, so that the smartphone 2a of the producer Aa as the supplier can access the blockchain network 90. The supplier information includes various information on the supplier of the asset, such as the supplier, the date and time that asset is supplied, an available amount of asset, a production method type of asset, and an owner of asset. Accordingly, the transmission and reception unit 91 of the node 9a receives the request for generating asset information (S62). This supplier information is information used for generating the transaction information illustrated in FIG. 17. The contents of the supplier information are determined in advance by a smart contract of the blockchain (contract automation).

Next, the verification unit 92 of the node 9a verifies the certificate and the supplier information received at S62 (S63). The following describes the example case in which the verification result indicates that verification is successful.

Next, the transaction processing unit 94 uses the supplier information received at S62 to generate transaction information as illustrated in FIG. 17 and stores the transaction information in the storage unit 9000 (S64). In this case, the transaction processing unit 94 assigns a transaction ID and sets a transaction type. The transaction information includes a transaction ID, transaction type, and supplier information (supplier, provision date and time, available amount, production method, and owner). Of these items, the transaction ID is an example of unique identification information for identifying transaction information. The transaction type is information indicating details of processing to be performed in relation to the asset information. In FIG. 17, since the transaction type is generation of asset information, the asset processing unit 95 generates asset information. The supplier is identification information identifying a supplier of asset. The provision date and time is information indicating the date and time when the asset is supplied from the supplier. The available amount is information indicating an amount of electricity that the supplier can provide within a certain time period. The type of production method is information indicating a type of production method illustrated in FIG. 10B. The owner is information indicating an owner of asset, who has ownership of the asset.

Next, the asset processing unit 95 generates the asset information illustrated in FIG. 17 according to the transaction information illustrated in FIG. 17 and stores the asset information in the storage unit 9000 (S65). In this case, the asset processing unit 95 sets the supplier information (supplier, date and time of provision, available amount, production method, and owner) in the transaction information, the transaction valid date, and the transaction status of the asset information. The transaction valid date is set, for example, one month after the date and time of provision. Further, the transaction status is information indicating whether or not the asset information has been transferred (assigned or not) to the user by the intermediary server 5. In FIG. 17, the transaction status of "not transferred" indicates that the asset has not been transferred to (allocated to) the user, that is, the intermediary agent has not yet provided the asset information to the user.

Further, the transmission and reception unit 91 of the node 9 distributes the transaction information generated at S64 as a block to the other nodes 9 of the blockchain network 90 (S66). Each of the other nodes verifies the block, and adds the verified block to a chain of blocks already saved in each node. Each of the other nodes then generates asset information in the same manner as S65 according to the transaction information, and stores the asset information in each storage area. A plurality of items of transaction information may be stored in one block.

Next, the transmission and reception unit 91 of the node 9 transmits a response to the smart meter 3a in response to the request received at S62 (S67). The response indicates whether generation of asset information is successful or fails. Accordingly, the transmission and reception unit 31a of the smart meter 3a receives the response.

Next, at the smart meter 3a, the storing and reading unit 39a stores contents of the response in the storage unit 3000a (S68).

As described above, the asset information indicating that the owner of the asset is the intermediary agent Da is managed on the blockchain network 90, to complete processing of providing asset information from the supplier to the intermediary agent.

### Processing of Providing Asset Information from the Intermediary Agent to the User

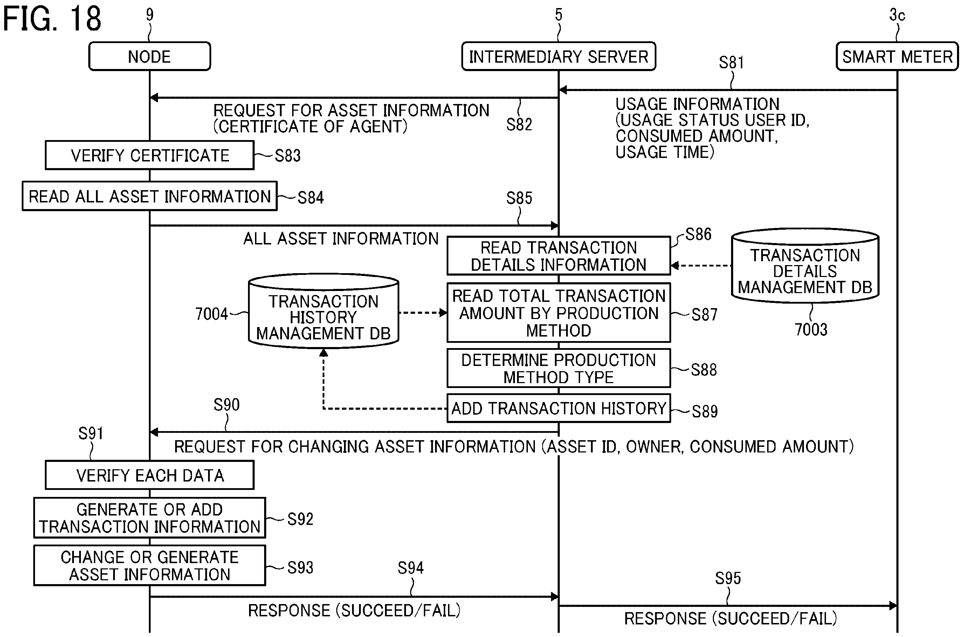

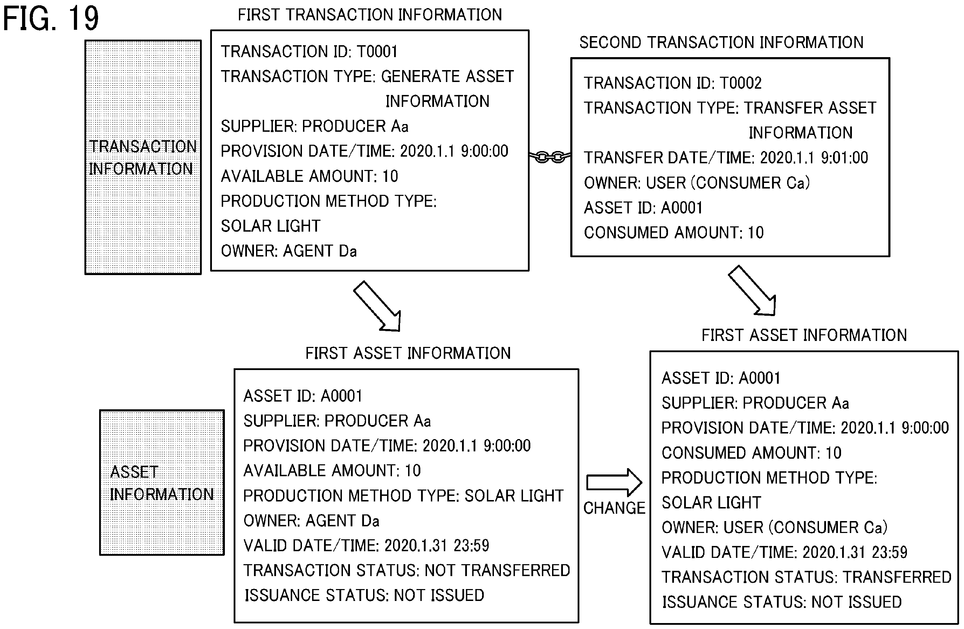

Referring now to FIGs. 18 and 19, processing of setting the user as an owner of the asset, for which transfer is intermediated by the intermediary agent, is described. FIG. 18 is a sequence diagram illustrating processing of setting the user as an owner of the asset, in transaction intermediated by the intermediary agent. FIG. 19 is a conceptual diagram illustrating transaction information and asset information, when a transaction of electricity is carried out for a usage amount.

First, the transmission and reception unit 31c of the smart meter 3c of the consumer Ca transmits usage information on usage of electricity, as asset, every predetermined time (for example, every 30 minutes) via the communication network 100 (S81). This usage information includes various information, such as information indicating a usage status of electricity as asset, a user ID for identifying the consumer Ca as the user, the amount of electricity being used as asset, and a time during when electricity is used as asset. The transmission and reception unit 51 of the intermediary server 5 receives the usage information. The transmission and reception unit 51 transmits a request for all asset information in which the intermediary agent Da of the intermediary server 5 is set as an owner, to the node 9 of the blockchain network 90 (S82). This request includes an electronic certificate certifying that the intermediary agent Da is a legitimate registered intermediary agent, and information indicating the intermediary agent Da as an owner, so that the intermediary server 5 of the intermediary agent Da can access the blockchain network 90. Accordingly, the transmission and reception unit 91 of the node 9 receives the request for all asset information.

Next, the verification unit 92 of the node 9 verifies the certificate received at S82 (S83). The certificate verification is a process of determining whether or not the received certificate is a certificate of the server that is registered in advance in the node 9. The following describes the example case in which the verification result indicates that verification is successful.

The storing and reading unit 99 of the node 9 reads out all items of asset information regarding assets indicating that the intermediary agent Da of the intermediary server 5 as the owner (S84). The transmission and reception unit 91 transmits all items of asset information read at S84 to the intermediary server 5 (S85). The transmission and reception unit 51 of the intermediary server 5 receives all the asset information. Accordingly, the intermediary server 5 receives all asset information with ownership that is currently assigned to the intermediary agent Da and can be allocated to the user.

Next, the storing and reading unit 59 of the intermediary server 5 searches the transaction details management DB 5003 using the user ID received at S81 as a search key to read out transaction details information corresponding to the user ID (S86). Further, the storing and reading unit 59 searches the transaction history management DB 5004 using the user ID received at S81 as a search key to read out total transaction amount of asset for each production method corresponding to the user ID (S87). For example, from the transaction history management DB 5004 of FIG. 10B, the storing and reading unit 59 reads 20 (kWh) as total transaction amount of electricity produced from solar light, and 160 (kWh) as total transaction amount of electricity produced from oil.

Next, the asset determination unit 53 determines a type of production method of asset, for particular asset information to be transferred to the consumer Ca as the user, based on the transaction details information read at S86 and total transaction amount of asset by each production method that is read at S87 (S88). For example, when the transaction details information indicates two types of production method "solar light" and "oil" are set, since the transaction history information indicates that the total transaction amount is 20 kWh for solar light and 160 kWh for oil, the deciding unit 53 determines the type of production method to be "solar light" so as to achieve the renewable energy usage ratio of 40%.

The storing and reading unit 59 stores information on a processing result of S88 in the transaction history management DB 5004 (S89). Specifically, for example, the storing and reading unit 59 adds, to the transaction history management DB 5004 (see FIG. 10B), a record having the transaction date and time of "2020.1.1 9:00-9:30", the transaction amount of 10 kWh, the production method type of solar light, and the total transaction amount of electricity produced from solar light of 30 kWh.

Next, the transmission and reception unit 51 of the intermediary server 5 transmits a request for changing the asset information to the node 9 of the blockchain network 90 (S90). This change request includes an asset ID for identifying the asset information indicating a particular asset produced from the production method that is determined at S88, from among the asset information received at S85. The change request, transmitted at S90, also includes various information such as a new owner and an amount of asset consumed. The information indicating the new owner may be the user ID received at S81 or the name of the user as the new owner. When there are a plurality of items of asset information on the asset produced using the specific type of production method determined at S88, the transmission and reception unit 51 determines a request for changing particular asset information, related to the asset having a valid date closet to the current date, from among the plurality of items of asset information.

Next, at the node 9, the verification unit 92 verifies each item of information (asset ID, owner, consumed amount) received at S90 (S91). This verification processing is for determining whether or not each item of information has a predetermined content that is written in a predetermined format. The following describes the example case in which the verification result indicates that verification is successful.

As illustrated in FIG. 19, the transaction processing unit 94 of the node 9 generates second transaction information, and adds a block containing the second transaction information to the chain of blocks containing the first transaction information, which is stored in the storage unit 9000 (S92). The asset processing unit 95 changes contents of the first asset information according to the second transaction information (S93).

The processing of S92 and S93 is described in detail with reference to FIG. 19. The first transaction information and the first asset information illustrated on the left of FIG. 19 are the same as the transaction information and the asset information of FIG. 17, respectively. The following describes an example case in which, after the smart meter 3a sets the owner of the asset to the intermediary agent Da (the first asset information is generated based on the first transaction information), the intermediary server 5 changes the owner of the asset to the consumer Ca (the first asset information is changed based on the second transaction information), as the intermediary agent Da intermediates transfer of the asset information (ownership of asset).

At S92, the transaction processing unit 94 generates the second transaction information as illustrated in FIG. 19. The second transaction information includes a unique transaction ID and a transaction type indicating transfer of asset information. The second transaction information additionally includes the transfer date and time when transfer of asset information is intermediated, a new owner of asset as a result of transfer, an asset ID for identifying the asset information that is transferred (transaction), and a consumed amount of asset (in this example, electricity) received at S90.

Then, at S93, the asset processing unit 95 changes the first asset information as illustrated in FIG. 19. The asset processing unit 95 changes the "available amount" in the first asset information to the "consumed amount", and changes the owner from the "intermediary agent Da" in the first asset information to the "consumer Ca". Furthermore, since all of available amount has been consumed, no more asset can be allocated. Therefore, the asset processing unit 95 changes the transaction status from "not transferred" in the first asset information to "transferred". The asset information whose transaction status has been changed to "transferred" loses the value of ownership, and will be excluded from a target of transfer in the future. Therefore, the transaction processing unit 94 does not refer to the asset information having the transaction status of "transferred", as asset information subjected to processing the transaction information having the transaction type of "transfer asset information". That is, the asset information excluded from the target of transfer is not re-transferred.

As described above, when all the available amount of the asset is consumed, the asset information is changed. Subsequently, returning to FIG. 18, the transmission and reception unit 91 of the node 9 transmits a response to the request received at S90 to the intermediary server 5 (S94). This response indicates that processing performed in response to the request received at S90 succeeded or failed. The transmission and reception unit 51 of the intermediary server 5 receives the response. The transmission and reception unit 51 of the intermediary server 5 transmits a response to the information received at S81 to the smart meter 3c (S95). Accordingly, the transmission and reception unit 31c of the smart meter 3c receives the response from the intermediary server 5. This response includes contents of response (success or failure) received at S94, and is stored for management or displayed by the smart meter 3c. Accordingly, the consumer Ca can grasp the transaction result of the asset.

### Processing to Issue Production Method Certificate

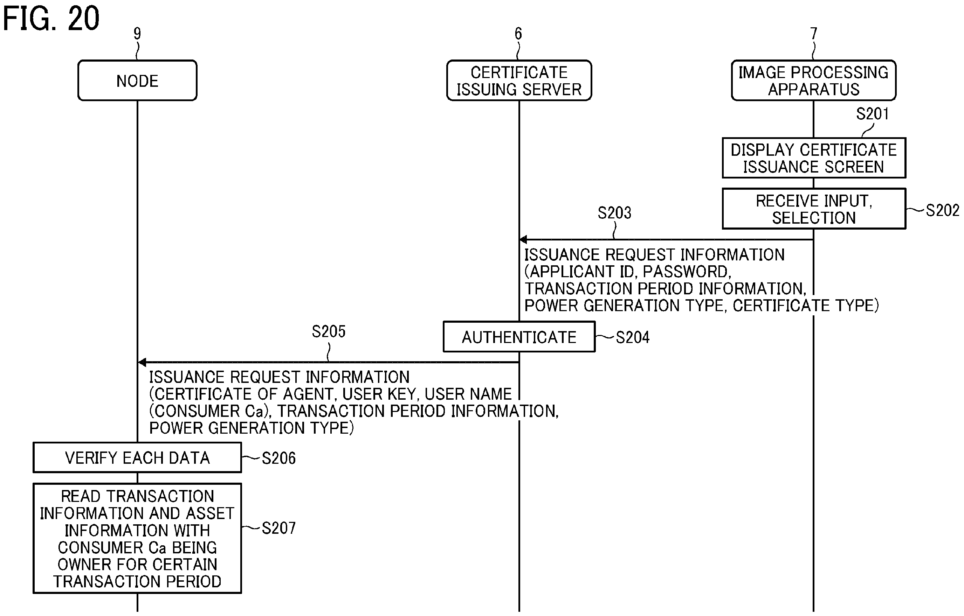

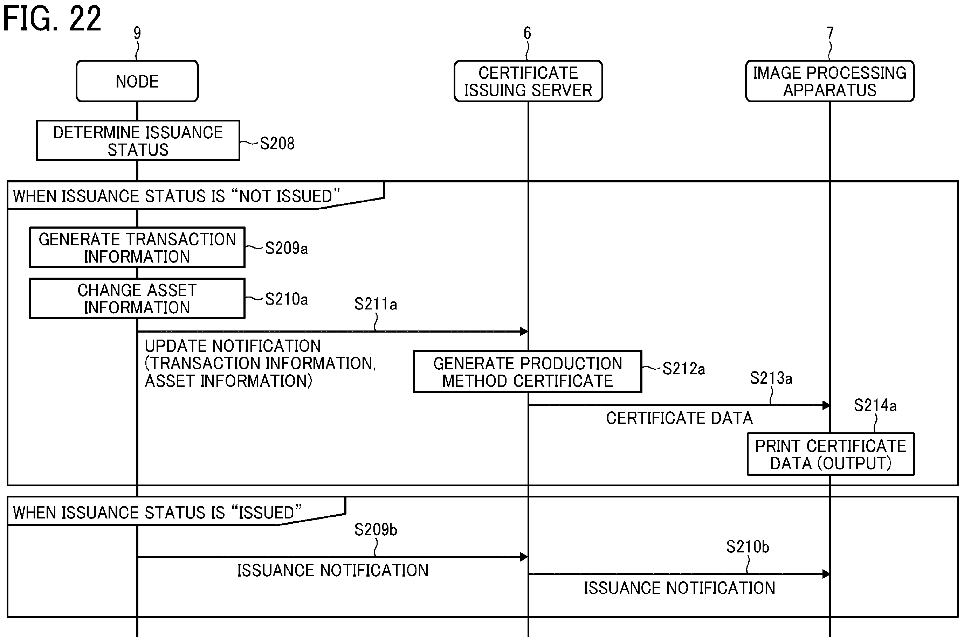

Next, referring to FIGs. 20 and 22, processing of issuing a production method certificate of asset is described. FIGs. 20 and 22 are a sequence diagram illustrating processing of issuing a production method certificate of asset. In order to prove that a type of production method of electricity to be used is renewable energy such as solar light, the applicant E requests the intermediary agent Da to issue a production method certificate that certifies a production method of asset. The following describes this processing in detail.

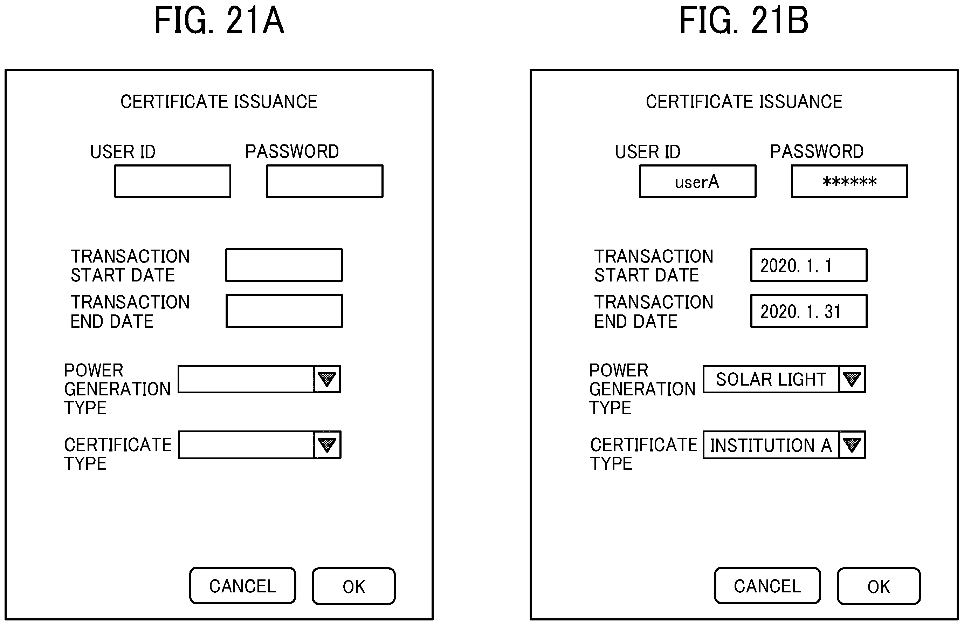

As illustrated in FIG. 20, in response to the applicant E operating the control panel 740 of the image processing apparatus 7, the display control unit 73 causes the control panel 740 to display a certification issuance screen illustrated in FIG. 21A (S201). The certificate issuance screen includes a plurality of input fields (applicant ID, password, usage time period of asset (in this case, electricity), usage end date of asset), and a plurality of selection buttons for selecting a production method of asset (in this case, power generation type), and a type of certificate to be issued. The certificate issuance screen further includes, at its bottom, an "OK" button to be pressed to confirm the transaction details such as the entered items of the input fields and the selected items of the selection buttons, and a "CANCEL" button to be pressed to cancel all the transaction details without being confirmed.

Here, the applicant E operates the control panel 740 of the image processing apparatus 7 to enter any desired item in each input field, and further selects a desired item using the selection button. When the applicant E presses the "OK" button, the input unit 72 receives the entered and selected items of the transaction details (S202).

As illustrated in FIG. 21B, the applicant E enters his or her own user ID (applicant ID) and password, and also enters from January 1, 2020 to January 31, 2020 as transaction period information. The applicant E selects "solar power generation" as a power generation type to certify a production method, and selects "institution A" as an issuing authority of the production method certificate. Then, the generation unit 77 generates issuance request information indicating a request for issuance of a production method certificate of asset, based on various types of information received at step S202.

Next, the transmission and reception unit 71 transmits issuance request information indicating to request issuance of a production method certificate of asset to the certificate issuing server 6 via the communication network 100 (S203). Thus, the transmission and reception unit 61 of the certificate issuing server 6 receives the issuance request information transmitted from the image processing apparatus 7. The issuance request information includes the items entered and selected at step S202. Specifically, the issuance request information includes an applicant ID and a password for identifying the applicant E, transaction period information indicating a period of transaction of asset, a production method (power generation type) of asset, and a certificate type. That is, the applicant E requests issuance of a production method certificate for a specific transaction period, for example, from January 1, 2020 to January 31, 2020.

Next, the authentication unit 62 of the certificate issuing server 6 authenticates the applicant E, who has transmitted the issuance request information (S204). Specifically, the authentication unit 62 searches the applicant management table (see FIG. 11A) using the applicant ID and password included in the issuance request information received at the transmission and reception unit 61 as search keys. When a combination of the applicant ID and the password included in the issuance request information is registered in the applicant management table, the authentication unit 62 reads a user name and a user key associated with the applicant ID and the password. Here, when the combination of the applicant ID and password included in the issuance request information is registered in the applicant management table, processing after step S205 is executed.

Next, the transmission and reception unit 61 transmits issuance request information indicating a request for issuance of a production method certificate to the node 9 of the blockchain network 90 (S205). The issuance request information includes an electronic certificate that authenticates that the intermediary agent Da is a legitimate intermediary agent, the user key and the user name (here, the consumer Ca) read at step S204, the transaction period information, and the power generation type. The certificate of the intermediary agent may be the same as a certificate of the intermediary server 5, which has been assigned to the intermediary agent Da as a certificate of the server. The transaction period information and the power generation type are the same as the transaction period information and the power generation type received at step S203. Thus, the transmission and reception unit 91 of the node 9 receives the issuance request information transmitted from the certificate issuing server 6.

Next, the verification unit 92 of the node 9a verifies the certificate and the user key received at S205 (S206). The certificate verification is a process of determining whether or not the received certificate is a certificate of the server that is registered in advance in the node 9. The verification of the user key is a process of determining whether or not the received user key is key information of a user (applicant) registered in advance in the node 9. The following describes the example case in which the verification result indicates that verification is successful.

Next, the storing and reading unit 99 reads out the transaction information and the asset information in which the consumer Ca is set as the owner, within a specific transaction time period indicated by the transaction period information received at S205 (S207). In this case, the storing and reading unit 99 reads out particular transaction information having the transaction date and time that falls within the specific transaction time period and the new owner of the consumer Ca. Further, the storing and reading unit 99 reads the asset information having the asset ID, which is indicated by the particular transaction information that is read.

As illustrated in FIG. 22, the determination unit 93 of the node 9 determines an issuance status of certificate of asset, indicated in the asset information read at step S207 (S208). Specifically, it is determined whether the issuance status indicated in the asset information read at step S207 is "not issued" or "issued". When the determination unit 93 determines that the issuance status is "not issued", the node 9 executes processing from step S209a. On the other hand, when the determination unit 93 determines that the issuance status is "issued", the node 9 executes processing from step S209b. First, the following describes an example case where it is determined that the issuance status is "not issued".

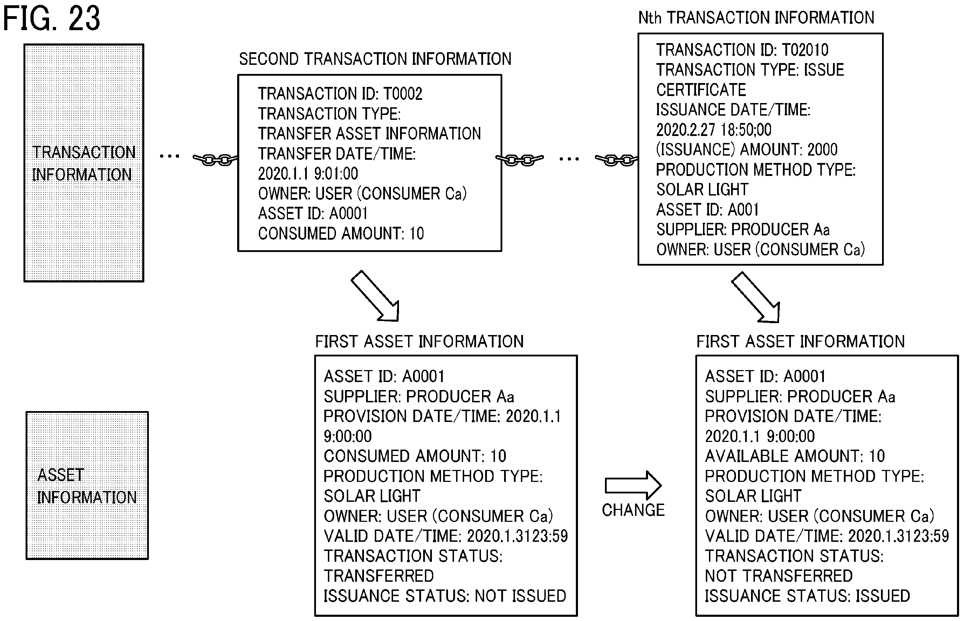

As illustrated in FIG. 23, the transaction processing unit 94 of the node 9 generates nth transaction information, and adds a block containing the nth transaction information to the chain of blocks containing the first transaction information, which is stored in the storage unit 9000 (S209a). The asset processing unit 95 changes contents of the first asset information according to the nth transaction information (S210a).

The processing of S209a and S210a is described in detail with reference to FIG. 23. The first transaction information and the first asset information illustrated on the left of FIG. 23 are the same as the transaction information and the asset information of FIG. 17 and FIG. 19, respectively.

At S209a, the transaction processing unit 94 generates the nth transaction information as illustrated in FIG. 23. The nth transaction information includes a unique transaction ID and a transaction type indicating issuance of certificate. The n-th transaction information indicates the issuance date and time when a production method certificate was issued, an amount of asset (in this case, electricity) to be issued as a certificate, a type of production method of asset for which the certificate is issued, an asset ID for identifying asset information to be issued, and a provider and an owner of asset.

Then, at S210a, the asset processing unit 95 changes the first asset information as illustrated in FIG. 23. After the production method certificate for the asset is issued, the asset processing unit 95 updates the issuance status of the production method certificate from "not issued" in the first asset information to "issued".

As described above, when the production method certificate is issued, the issuance status indicated in the asset information is changed. At the node 9, the transaction processing unit 94 carries out transactions using a plurality of pieces of asset information, when the usage amount indicated in one piece of asset information is not sufficient to cover an amount of asset to be issued as the certificate. In this case, the asset processing unit 95 changes (updates) not only the first asset information but also a plurality of pieces of asset information.

Returning to FIG. 22, the transmission and reception unit 91 of the node 9 transmits an update notification indicating that the issuance status has been updated, to the certificate issuing server 6 (S211a). The update notification includes the transaction information (n-th transaction information) generated at S209a and the asset information (first asset information) changed at S210a. Accordingly, the transmission and reception unit 61 of the certificate issuing server 6 receives the update notification transmitted from the node 9.

Next, the generation unit 63 of the certificate issuing server 6 generates a production method certificate based on the transaction information and the asset information included in the update notification received at the transmission and reception unit 61 (S212a). Specifically, the generation unit 63 searches the certificate type management table (see FIG. 11B) by using a certification type included in the transaction request information received at S203 as a search key. The generation unit 63 further reads a form of the certificate associated with the institution name, which is indicated by a certificate type included in the transaction request information. Then, the generation unit 63 writes the items indicated in the transaction information and the asset information received at S211a, in the form that is read, to generate a production method certificate.

Next, the transmission and reception unit 61 of the certificate issuing server 6 transmits certificate data on a production method certificate, generated by the generation unit 63, to the image processing apparatus 7 that has transmitted the issuance request information at S203 (S213a). Thus, the transmission and reception unit 71 of the image processing apparatus 7 receives the certificate data transmitted from the certificate issuing server 6.

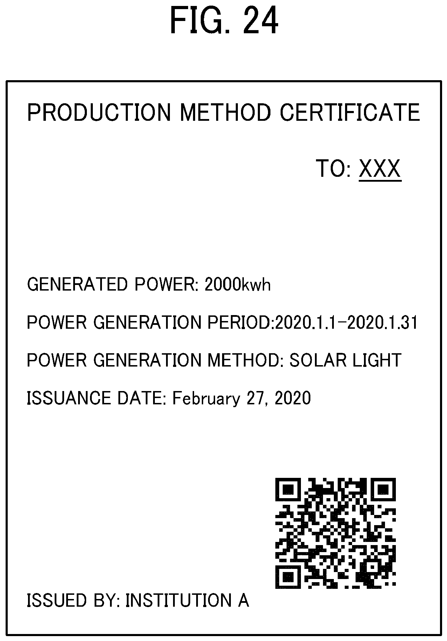

Then, the image processing apparatus 7 outputs the certificate data received at S212 (S214a). Specifically, in response to the applicant E operating the control panel 740 of the image processing apparatus 7, the print processing unit 75 of the image processing apparatus 7 executes processing to print the certificate data. FIG. 24 is a diagram illustrating an example of a printed production method certificate. The production method certificate illustrated in FIG. 24 is a certificate of electricity for certifying a production method of electricity, as an example of an asset used by an applicant (user). The certificate of electricity is referred to as, for example, a green power certificate. The production method certificate indicates, an amount of electricity being produced that corresponds to an amount for which the certificate is issued, a power generation period indicated by the transaction period information for which the certificate is issued, a power generation method as a production method of an asset (in this case, electricity) for which the certificate is issued, an issuance date of the certificate, and an issuing institution of the certificate as an issuance source. The production method certificate further includes a transaction identification image for confirming that contents of the certificate is the same as the transaction history (transaction information) of the blockchain network 90.

The transaction identification image is, for example, a QR code (registered trademark) as illustrated in FIG. 24. The transaction identification image includes a transaction ID used for matching the transaction history of the blockchain network 90. For example, a business operator who has received the application from the applicant E with the production method certificate can confirm the validity of the certificate by reading the transaction identification image indicated in the production method certificate.

The transaction identification image is generated by the generation unit 63 of the certificate issuing server 6, through processing of S212a. The generation unit 63 generates a transaction identification image using the IDs (transaction IDs) of the transaction information included in the update notification received at S211a. The transaction identification image is not limited to the QR code, and may be, for example, a one-dimensional code such as a barcode, a two-dimensional code such as DataMatrix (DataCode), MaxiCode, or PDF417, or information (or an image) readable by a reading device such as RFID (Radio Frequency Identification). Further, the transaction identification image may be an image in which the transaction ID is directly written to be visually recognized.

At S214a, the image processing apparatus 7 outputs the certificate data through the print processing performed by the printing process unit 75. However, the image processing apparatus 7 may output the certificate data by causing the display control unit 73 to display on the panel display device 740a a display image based on the certificate data. When the certificate data is displayed and output, the image processing apparatus 7 may be a terminal or an apparatus that does not have a printing function. In such case, the image processing apparatus 7 may be, for example, a smartphone, a tablet terminal, a PC, a smart watch, smart glasses, or the like, provided with a display device. When the applicant E is in the same environment as the consumer Ca, the smartphone 2c of the consumer Ca may be provided with the function of the image processing apparatus 7.

The processing of intermediating issuance of the production method certificate by the intermediary agent Da then ends. The applicant E, who has received the production method certificate, is able to use the issued production method certificate to enhance public image of the company or apply the government for a subsidy based on use of renewable energy.

The following describes another case where it is determined at S208 of FIG. 22 that the issuance status is "issued". The transmission and reception unit 91 of the node 9 transmits, to the certificate issuing server 6, an issuance completion notification indicating that a production method certificate of asset corresponding to the issuance request information received at S203 has been issued (S209b). Accordingly, the transmission and reception unit 61 of the certificate issuing server 6 receives the issuance completion notification transmitted from the node 9. The transmission and reception unit 61 of the certificate issuing server 6 transmits the issuance completion notification received at S209b to the image processing apparatus 7 that has transmitted the issuance request information at S203 (S210b). Accordingly, the transmission and reception unit 71 of the image processing apparatus 7 receives the issuance completion notification transmitted from the certificate issuing server 6.

As described above, when the issuance status indicated in the asset information is "issued", the node 9 does not issue a certificate to the asset whose issuance status is "issued" even when the node 9 receives the issuance request information. Thus, the node 9 can prevent double issuance of the production method certificate for the same asset.

### Effects of Embodiments

As described above, according to the embodiment, the transaction system 1 performs processing to issue a production method certificate for the applicant E using the image processing apparatus 7 via the certificate issuing server 6 of the intermediary agent Da. When the certificate issuing server 6 receives a certificate issuance request from the image processing apparatus 7, the certificate issuing server 6 transmits the certificate issuance request to the node 9 of the blockchain network 90. When the issuance status of the certificate of the asset subjected to certificate issuance is "not issued", the node 9 updates the issuance status to "issued". When the issuance status is updated to "issued" by the node 9, the certificate issuing server 6 generates certificate data and provides the certificate data to the image processing apparatus 7. On the other hand, when the issuance status of the asset subjected to certificate issuance is issued, the node 9 transmits an issuance completion notification to the image processing apparatus 7 via the certificate issuing server 6. Accordingly, in the transaction system 1, once the certificate is issued at the node 9, the issuance status indicated in the asset information is updated, such that double issuance of the certificate can be prevented.

The certificate issuing server 6 of the intermediary agent Da, who has been approved by the certificate issuing authority, provides the applicant E with the production method certificate generated using the transaction information and the asset information acquired from the blockchain network 90. This can reduce the burden on the applicant E, for example, to exchange documents with the issuing authority until the certificate is issued.

Further, the applicant E can easily acquire the production method certificate that may be necessary for various applications, by displaying or printing the production method certificate acquired from the certificate issuing server 6 with the image processing apparatus 7. The production method certificate is further provided with the transaction identification image for identifying the transaction history on the blockchain network 90. Thus, the business operator who has received an application based on the production method certificate can confirm the validity of the transaction.

Since quality of assets, such as electricity, provided to the user is the same, it would be difficult to know a type of production method of the asset. In view of this, the node 9 of the blockchain network 90 manages asset information indicating a type of production method of asset and ownership of asset, and transaction information from which such asset information is generated, such that a production method of asset can be verified without fraud.

Moreover, in order to encourage stable consumption of electricity, it is necessary to adjust the consumed electricity and the produced electricity in real time to make them equal (same time, same amount). Since the blockchain is a decentralized ledger system, it takes a certain amount of time to confirm consistency of each ledger information via the network. Therefore, it is not suitable to apply the blockchain technology to track use of such asset, which requires responsiveness in realtime. In view of this, in the embodiment, the intermediary server 5 is configured to transmit, to the blockchain network 90, a request for changing the ownership of the asset information on the blockchain network 90 from the original owner to the user (consumer Ca), not at a time when the consumer Ca starts using the asset such as electricity, but after the consumer Ca has consumed the asset. Through this processing, the blockchain technology can be applied to an immediate exchange of asset, requiring real-time processing, to manage transfer of ownership of asset. Moreover, since the intermediary server 5 changes the asset information managed by the blockchain network 90 on behalf of the supplier (producer Aa, etc.) and the user (consumer Ca, etc.), the supplier (producer Aa, etc.) and the user (consumers Ca, etc.) can exchange electricity, without any need to consider whether the asset information has been changed.

Further, the above-described management by the intermediary server 5, which transfers the ownership of asset with a specific type of production method, can be applied to an intermediate exchange of asset such as electricity produced from renewable energy such as solar light.

### Variations of Embodiment

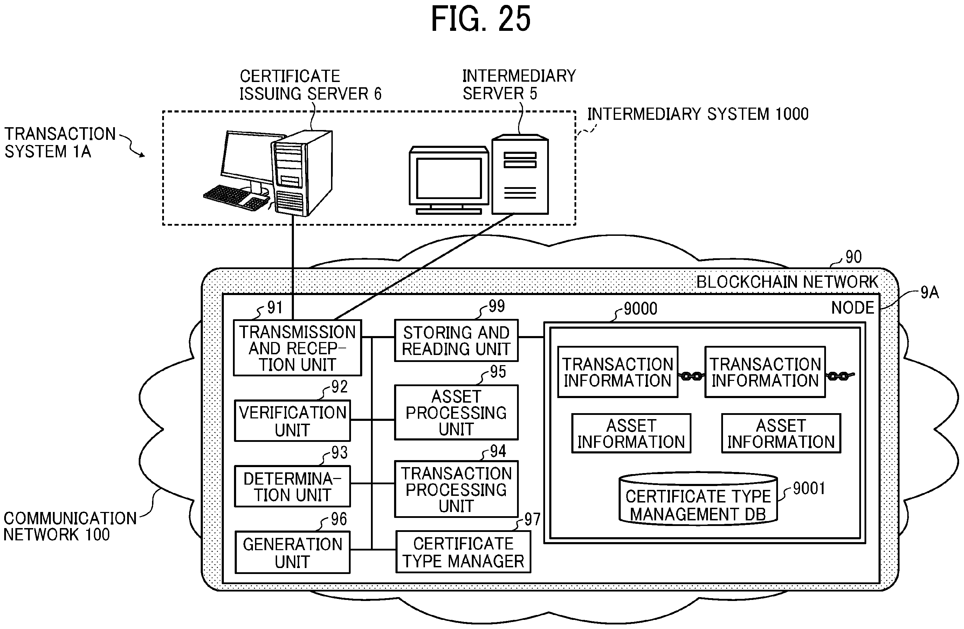

Referring now to FIGs. 25 to 30, variations of the present embodiment are described. In the transaction system 1A according to the modified example 1, in the case where the intermediary system 1000 intermediates processing of issuing a production method certificate, the node 9 performs processing to generate the certificate. The following describes this processing in detail. The elements and functions that are same to those of the above-described embodiment are denoted by the same reference numerals, and the description thereof will be omitted.

FIG. 25 is a block diagram illustrating a functional configuration of the intermediary server, the certificate issuing server, and the node in the transaction system according to the modified example 1. The node 9A of the transaction system 1A illustrated in FIG. 25 includes a generation unit 96 and a certificate type manager 97, in addition to the configuration of the node 9 described in the above-described embodiment. The storage unit 9000 of the node 9A stores a certificate type management DB 9001, implemented by a certificate type management table as illustrated in FIG. 11B.

The generation unit 96, which is implemented by instructions of the CPU 901, generates a production method certificate to be provided to the applicant E based on the transaction information and the asset information.

The certificate type manager 97, which is mainly implemented by instructions of the CPU 901, manages forms of a certification for each issuing authority that issues a production method certificate.

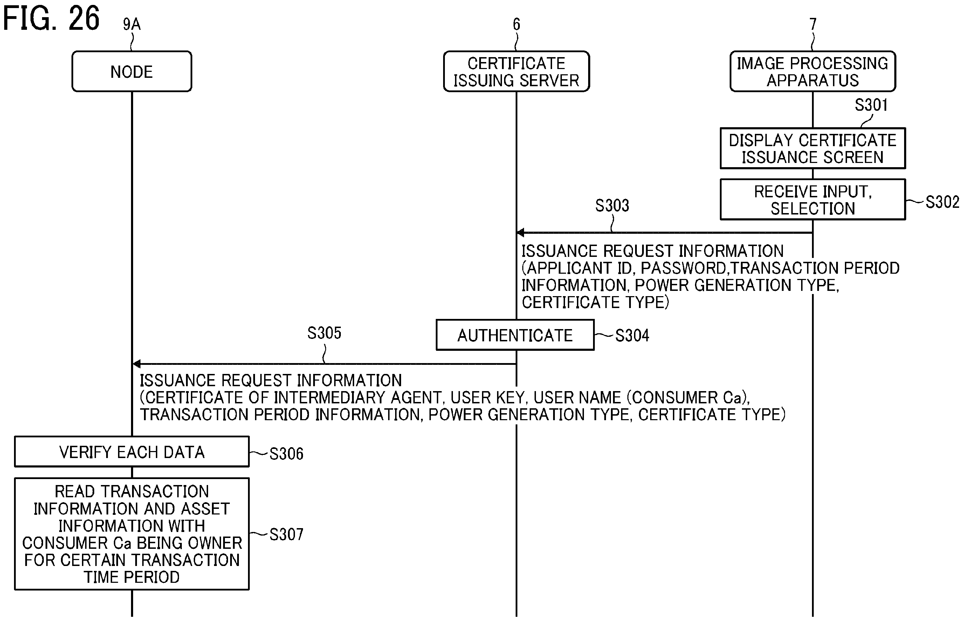

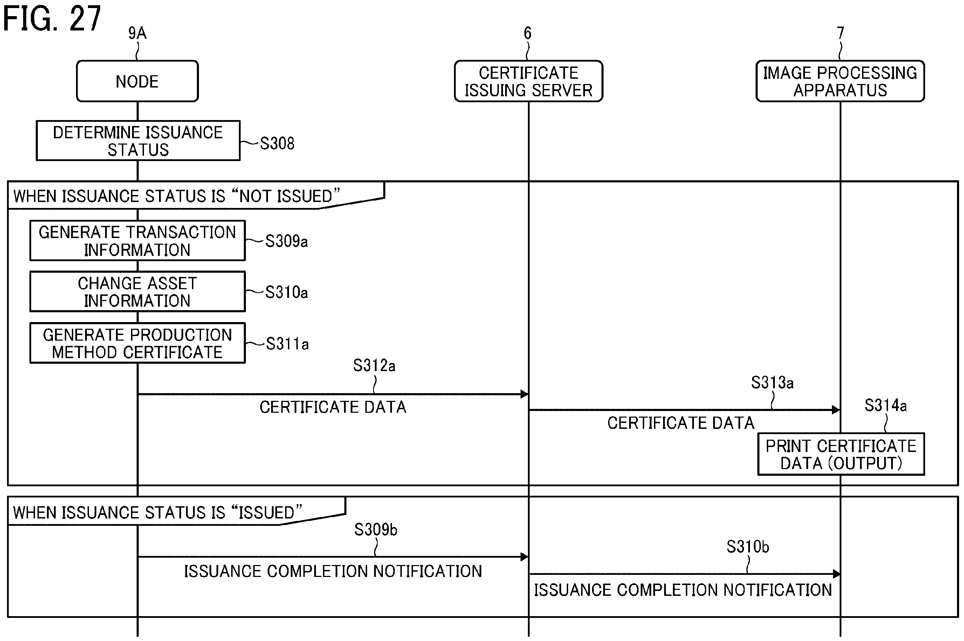

FIGs. 26 and 27 are a sequence diagram illustrating processing of issuing a production method certificate of asset, performed by the transaction system according to the modified example 1. The processing from step S301 to step S307 is the same as processing from step S201 to S207 illustrated in FIGs. 20 and 22, and thus description thereof will be omitted. The issuance request information transmitted from the transmission and reception unit 61 of the certificate issuing server 6 at S305 includes a certificate type received at S303 in addition to the information transmitted at S205.

As illustrated in FIG. 27, the determination unit 93 of the node 9A determines an issuance status of certificate of asset, indicated in the asset information read at step S307, similarly to the process referring to S208 of FIG. 22 (S308). When the determination unit 93 determines that the issuance status is "not issued", the node 9A executes processing from step S309a. On the other hand, when the determination unit 93 determines that the issuance status is "issued", the node 9A executes processing from step S309b. First, the following describes an example case where it is determined that the issuance status is "not issued".

Similarly to processing referring to S209a of FIG. 22, the transaction processing unit 94 of the node 9A generates nth transaction information, and adds a block containing the nth transaction information to the chain of blocks containing the first transaction information, which is stored in the storage unit 9000 (S309a). Similarly to the processing referring to S210a of FIG. 22, the asset processing unit 95 changes contents of the first asset information according to the nth transaction information (S310a).

The generation unit 96 of the node 9A generates a production method certificate based on the transaction information generated at S309a and the asset information changed at S310a (S311a). Specifically, the generation unit 96 searches the certification type management table (see FIG. 11B) by using a certification type included in the issuance request information received at S305 as a search key. The generation unit 96 further reads a form of the certificate associated with the institution name, which is indicated by a certificate type included in the issuance request information. Then, the generation unit 96 writes the items indicated in the transaction information generated at S309a and the asset information changed at S310a, in the form that is read, to generate a production method certificate.

Next, the transmission and reception unit 91 of the node 9A transmits the certificate data for the production method certificate, generated by the generation unit 96, to the certificate issuing server 6 (S312a). Thus, the transmission and reception unit 61 of the certificate issuing server 6 receives the certificate data transmitted from the node 9A. Then, the transmission and reception unit 61 of the certificate issuing server 6 transmits the certificate data, transmitted from the node 9A, to the image processing apparatus 7 that transmitted the issuance request information at S303 (S313a). Thus, the transmission and reception unit 71 of the image processing apparatus 7 receives the certificate data transmitted from the certificate issuing server 6.

Then, the image processing apparatus 7 outputs the certificate data received at S313a (S313). The method of outputting the certificate data by the image processing apparatus 7 is the same as that described for processing of S214a.

The following describes another case where it is determined at S308 of FIG. 27 that the issuance status is "issued". The transmission and reception unit 91 of the node 9A transmits, to the certificate issuing server 6, an issuance completion notification indicating that the production method certificate of asset, which corresponds to the issuance request information received at S305, has been issued (S309b). Accordingly, the transmission and reception unit 61 of the certificate issuing server 6 receives the issuance completion notification transmitted from the node 9A. The transmission and reception unit 61 of the certificate issuing server 6 transmits the issuance completion notification received at S309b to the image processing apparatus 7 that has transmitted the issuance request information at S303 (S310b). Accordingly, the transmission and reception unit 71 of the image processing apparatus 7 receives the issuance completion notification transmitted from the certificate issuing server 6.

As described above, in the transaction system 1A according to the modified example 1, the node 9A of the blockchain network 9 performs processing of generating a production method certificate in the process of issuing a production method certificate of asset via the certificate issuing server 6. In this case, since the certificate issuing server 6 performs only the processing of authenticating the applicant E, and the processing of intermediating exchange of data with the image processing apparatus 7 and the node 9A, the processing load on the intermediary agent Da can be reduced.

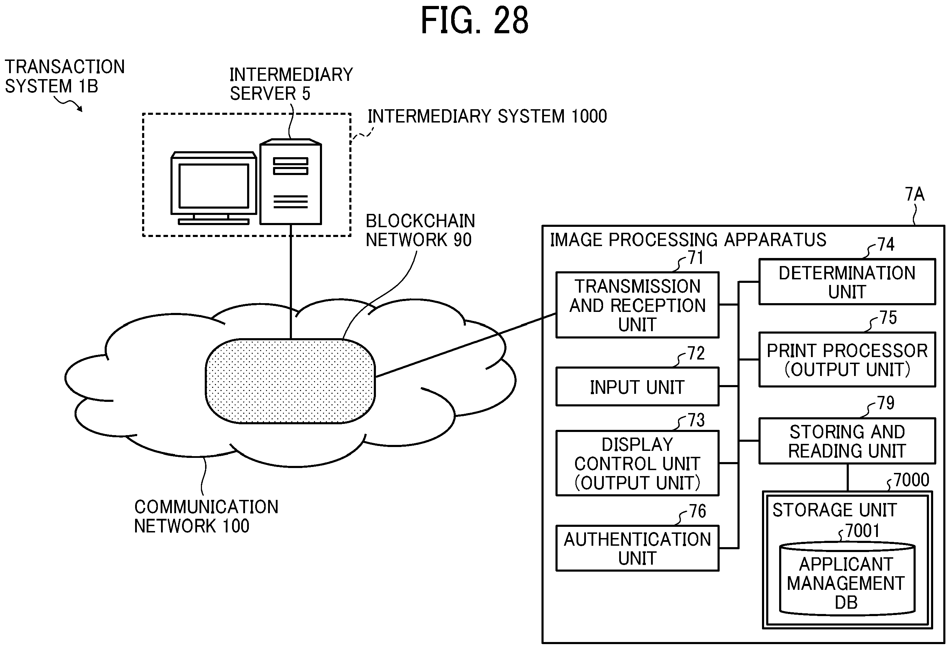

Next, referring to FIGs. 28 to 30, a configuration of a transaction system 1B is described according to the modified example 2. In the transaction system 1B according to the modified example 2, in addition to the elements of the transaction system 1A according to the modified example 1, the image processing apparatus 7A is provided with an authentication function and a communication function with the blockchain network 90. The image processing apparatus 7A is installed with a dedicated application, which allows exchange of information with the blockchain network 90. The following describes this processing in detail. The elements and functions that are same to those of the above-described embodiment are denoted by the same reference numerals, and the description thereof will be omitted.

FIG. 28 is a block diagram illustrating a functional configuration of the image processing apparatus in the transaction system according to the modified example 2. The image processing apparatus 7A of the transaction system 1B illustrated in FIG. 25 includes an authentication unit 76 in addition to the elements of the image processing apparatus 7 described in the above embodiment. The storage unit 7000 of the image processing apparatus 7A stores an applicant management DB 7001, implemented by an applicant management table as illustrated in FIG. 11A.

The authentication unit 76, which is implemented by instructions of the CPU 701, authenticates an applicant E who requests issuance of a production method certificate based on applicant identification information received at the input unit 72.

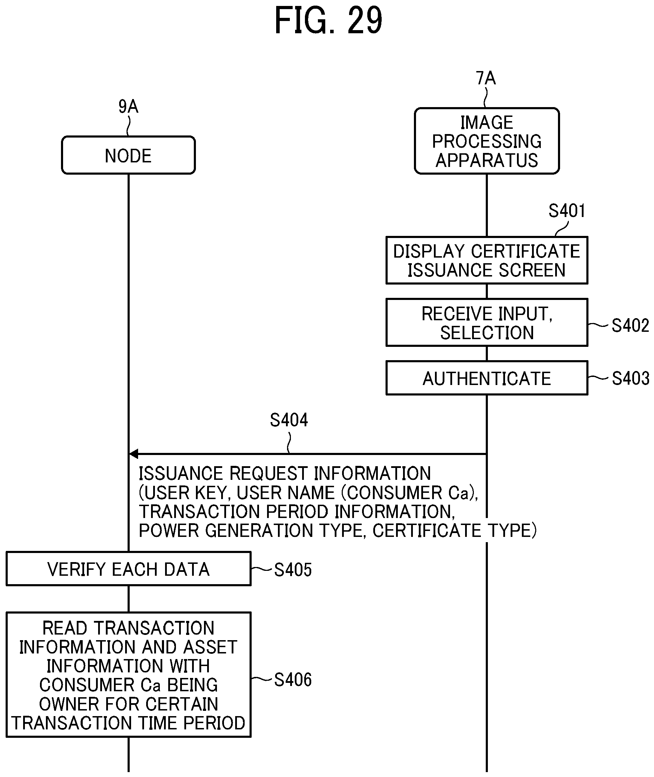

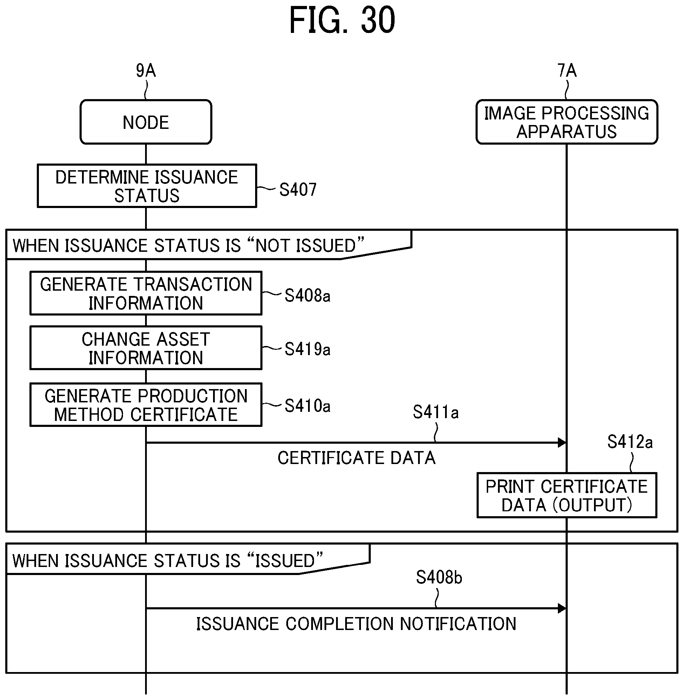

FIGs. 29 and 30 are a sequence diagram illustrating processing of issuing a production method certificate of asset, performed by the transaction system according to the modified example 2. The processing from step S401 to step S402 is the same as processing from step S201 to S202 illustrated in FIG. 20, and thus description thereof will be omitted.

The authentication unit 76 of the image processing apparatus 7A performs processing of authenticating the applicant E (S403). Specifically, the authentication unit 76 searches the applicant management table (see FIG. 11A) using the applicant ID and password, input at S402, as search keys. When a combination of the applicant ID and the password having been input is registered in the applicant management table, the authentication unit 76 reads a user name and a user key associated with the applicant ID and the password. Here, when the combination of the applicant ID and password having been input is registered in the applicant management table, processing after step S404 is executed.

Next, the transmission and reception unit 71 transmits issuance request information indicating to request issuance of a production method certificate of asset to the node 9A via the communication network 100 (S404). Thus, the transmission and reception unit 91 of the node 9A receives the issuance request information transmitted from the image processing apparatus 7. The issuance request information includes the user key and the user name (in this example, the customer Ca) read at S403, the transaction period information indicating a period for transaction of the asset input at S402, and a production method (power generation type) and a certification type of the asset having been selected at S402.

Next, the verification unit 92 of the node 9A verifies the user key received at S404 (S405). The verification of the user key is a process of determining whether or not the received user key is key information of a user (applicant) registered in advance in the node 9. The following describes the example case in which the verification result indicates that verification is successful. Similarly to processing referring to S207 of FIG. 20, the storing and reading unit 99 reads out the transaction information and the asset information in which the consumer Ca is set as the owner, within a specific transaction time period indicated by the transaction period information received at S405 (S406).

As illustrated in FIG. 30, the determination unit 93 of the node 9A determines an issuance status of certificate of asset, indicated in the asset information read at step S406, similarly to the process referring to S208 of FIG. 22 (S407). When the determination unit 93 determines that the issuance status is "not issued", the node 9A executes processing from step S408a. On the other hand, when the determination unit 93 determines that the issuance status is "issued", the node 9A executes processing from step S408b. First, the following describes an example case where it is determined that the issuance status is "not issued".

Similarly to processing referring to S209a of FIG. 22, the transaction processing unit 94 of the node 9A generates nth transaction information, and adds a block containing the nth transaction information to the chain of blocks containing the first transaction information, which is stored in the storage unit 9000 (S408a). Similarly to the processing referring to S210a of FIG. 22, the asset processing unit 95 changes contents of the first asset information according to the nth transaction information (S409a).

The generation unit 96 of the node 9A generates a production method certificate based on the transaction information generated at S408a and the asset information changed at S409a (S410a). Specifically, the generation unit 96 searches the certification type management table (see FIG. 11B) by using a certification type included in the issuance request information received at S404 as a search key. The generation unit 96 further reads a form of the certificate associated with the institution name, which is indicated by a certificate type included in the issuance request information. Then, the generation unit 96 writes the items indicated in the transaction information generated at S408a and the asset information changed at S409a, in the form that is read, to generate a production method certificate.

Next, the transmission and reception unit 91 of the node 9A transmits certificate data on a production method certificate, generated by the generation unit 96, to the image processing apparatus 7 that has transmitted the issuance request information at S404 (S411a). Accordingly, the transmission and reception unit 71 of the image processing apparatus 7A receives the certificate data transmitted from the node 9A.

Then, the image processing apparatus 7A outputs the certificate data received at S410 (S412a). The method of outputting the certificate data by the image processing apparatus 7A is the same as that described for processing of S213.

The following describes another case where it is determined at S407 of FIG. 30 that the issuance status is "issued". The transmission and reception unit 91 of the node 9A transmits, to the image processing apparatus 7A that has transmitted the issuance request information at S404, an issuance completion notification indicating that the production method certificate of asset, which corresponds to the issuance request information received at S404, has been issued (S408b). Accordingly, the transmission and reception unit 71 of the image processing apparatus 7A receives the issuance completion notification transmitted from the node 9A.

As described above, in the transaction system 1B according to the modified example 2, when outputting the production method certificate using the image processing apparatus 7A, the applicant E can refer to the transaction history of the blockchain network 90 without requiring a system or an apparatus other than the image processing apparatus 7A.

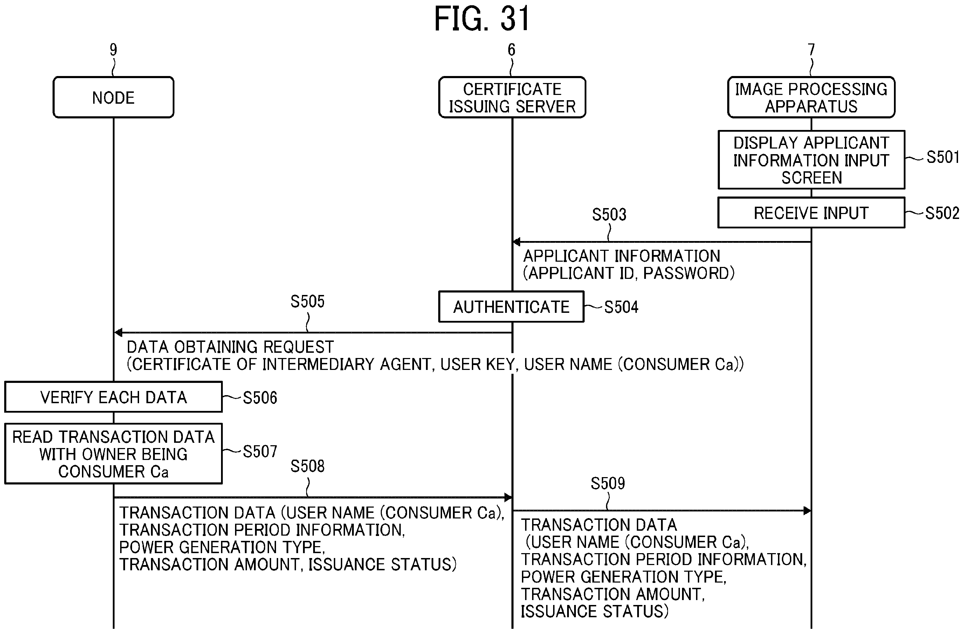

Next, referring to FIGs. 31 to 33, a configuration of a transaction system 1C is described according to the modified example 3. The transaction system 1C according to the modified example 3 is different from the above-described embodiments in operation of issuing a production method certificate of asset by the applicant. The following describes this processing in detail. The elements and functions that are same to those of the one or more above-described embodiments are denoted by the same reference numerals, and the description thereof will be omitted.

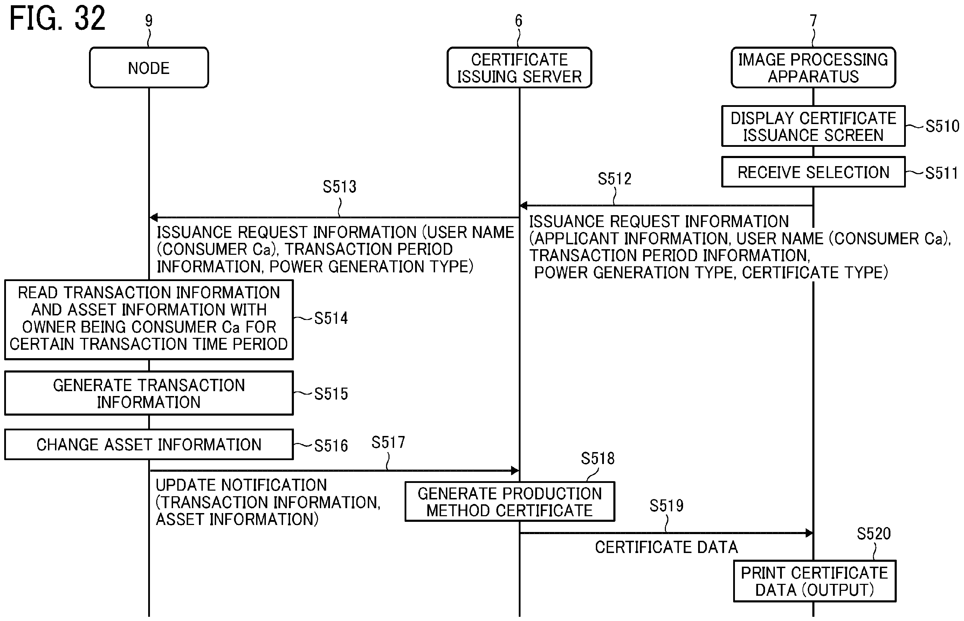

FIGs. 31 and 32 are a sequence diagram illustrating processing of issuing a production method certificate of asset, performed by the transaction system according to the modified example 3. In order to prove that a type of production method of electricity to be used is renewable energy such as solar light, the applicant E requests the intermediary agent Da to issue a production method certificate that certifies a production method of asset.

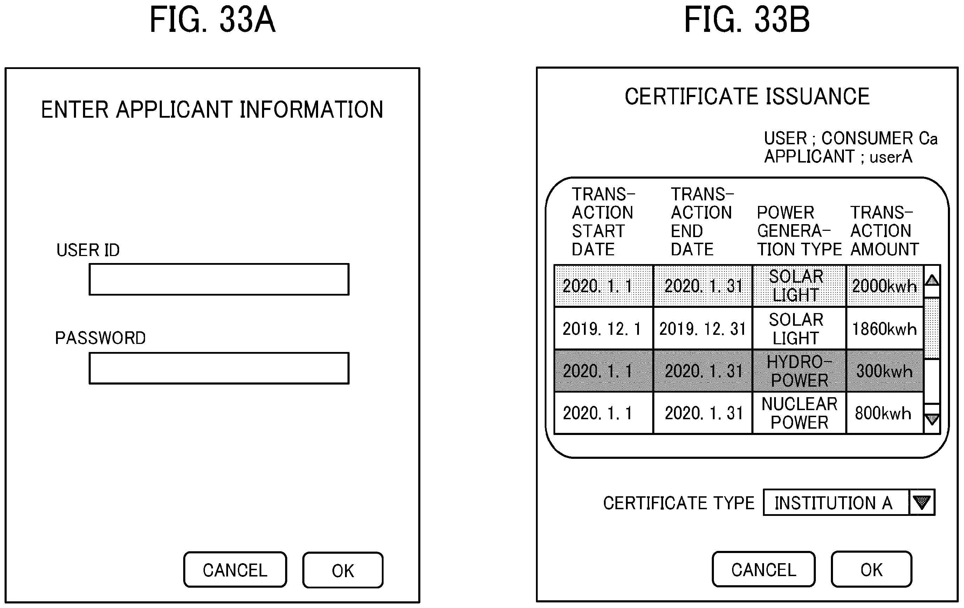

As illustrated in FIG. 31, in response to the applicant E operating the control panel 740 of the image processing apparatus 7, the display control unit 73 causes the control panel 740 to display an applicant information input screen illustrated in FIG. 33A (S501). The applicant input screen includes input fields for respectively inputting an applicant ID and a password, an "OK" button to be pressed to confirm input to the input fields, and a "CANCEL" button to be pressed to cancel the input without confirmation.

When the applicant E operates the control panel 740 of the image processing apparatus 7 to enter desired contents in the input fields and presses the "OK" button, the input unit 72 receives the input of the applicant information (S502).

Next, the transmission and reception unit 71 transmits the applicant information entered at S502 to the certificate issuing server 6 via the communication network 100 (S503). Thus, the transmission and reception unit 61 of the certificate issuing server 6 receives the applicant information transmitted from the image processing apparatus 7.

Next, the authentication unit 62 of the certificate issuing server 6 authenticates the applicant E, who has transmitted the applicant information (S504). Specifically, the authentication unit 62 searches the applicant management table (see FIG. 11A) using the applicant ID and password included in the applicant information received at the transmission and reception unit 61 as search keys. When a combination of the applicant ID and the password included in the applicant information is registered in the applicant management table, the authentication unit 62 reads a user name and a user key associated with the applicant ID and the password. Here, when the combination of the applicant ID and password included in the applicant information is registered in the applicant management table, processing after step S505 is executed.

Next, the transmission and reception unit 61 transmits, to the node 9 of the blockchain network 90, a data transmission request indicating a request for transaction data to be provided to the applicant E (S505). The data acquisition request includes an electronic certificate that authenticates that the intermediary agent Da is a legitimate intermediary agent, and the user key and the user name (here, the customer Ca) read at step S504. The certificate of the intermediary agent may be the same as a certificate of the intermediary server 5, which has been assigned to the intermediary agent Da as a certificate of the server. Thus, the transmission and reception unit 91 of the node 9 receives the data acquisition request transmitted from the certificate issuing server 6.

Next, the verification unit 92 of the node 9a verifies the certificate and the user key received at S505 (S506). The certificate verification is a process of determining whether or not the received certificate is a certificate of the server that is registered in advance in the node 9. The verification of the user key is a process of determining whether or not the received user key is key information of a user (applicant) registered in advance in the node 9. The following describes the example case in which the verification result indicates that verification is successful.

Next, the storing and reading unit 99 reads the transaction data indicating the transaction details of the consumer Ca, based on the transaction information and the asset information, in which the consumer Ca indicated by the data acquisition request received at S505 is set as the owner (S507). In this case, the storing and reading unit 99 reads out particular transaction information having the consumer Ca as the owner. Further, the storing and reading unit 99 reads the asset information having the asset ID, which is indicated by the particular transaction information that is read. Then, the storing and reading unit 99 reads, as transaction data, information indicating the provision date and time, the amount of usage, the type of production method, and the issuance status, each indicated by the asset information that is read.

Next, the transmission and reception unit 91 transmits the transaction data read at S507 to the certificate issuing server 6 (S508). The transaction data includes various information, such as the user name (consumer Ca) received at S505, the transaction period information based on the provision date and time read at S507, the transaction amount based on the usage amount read at S507, and the type of production method (here, power generation type) and the issuance status read at S507. The transmission and reception unit 61 of the certificate issuing server 6 transmits (transfers) the transaction data transmitted from the node 9 to the image processing apparatus 7 (S509). Accordingly, the transmission and reception unit 71 of the image processing apparatus 7 receives the transaction data transmitted from the node 9.

Referring to FIG. 32, the display control unit 73 causes the control panel 740 to display a certificate issuance screen illustrated in FIG. 33B (S510). The certificate issuance screen displays a list of transaction data items, indicating transaction details of the consumer Ca received at S509. Each transaction data item displayed on the list includes information on a transaction start date and a transaction end date of an asset (here, electricity), a production method of the asset (here, a power generation type), and a transaction amount. Each transaction data item on the list is displayed on the control panel 740 so as to be selectable. The example of FIG. 33B illustrates a state in which the transaction data item at the top of the list is selected. Of the list of the transaction data items, the transaction data item having the received issuance status of "issued" is displayed in, for example, gray, so that it is not selectable by the applicant E. The example illustrated in FIG. 33B illustrates a state in which a certificate for the transaction data item listed third from the top on the list was issued. The transaction data item having the "issued" status may not be displayed on the list. The certificate issuance screen further includes, at its bottom, a selection button for selecting a type of certificate to be issued, an "OK" button to be pressed to confirm the transaction details such as the selected items of the transaction data list and the selection buttons, and a "CANCEL" button to be pressed to cancel all the transaction details without being confirmed.

Here, when the applicant E operates the control panel 740 of the image processing apparatus 7 to select desired content using the list and selection buttons and presses the "OK" button, the input unit 72 receives the selection of the transaction data (S511). Then, the generation unit 77 generates issuance request information indicating a request for issuance of a production method certificate of asset, based on various types of information received at step S511.

Next, the transmission and reception unit 71 transmits issuance request information indicating to request issuance of a production method certificate of asset to the certificate issuing server 6 via the communication network 100 (S512). Thus, the transmission and reception unit 61 of the certificate issuing server 6 receives the issuance request information transmitted from the image processing apparatus 7. The issuance request information includes the items selected at S511. Specifically, the issuance request information includes applicant information (applicant ID and password) for identifying the applicant E, the user name (consumer Ca) received at S509, and the information and certificate type indicated in the transaction data selected at S511. The information indicated in the transaction data is, for example, transaction period information indicating a period for transaction of asset, and a production method (power generation type) of the asset.

Next, the transmission and reception unit 61 transmits issuance request information indicating a request for issuance of a production method certificate to the node 9 of the blockchain network 90 (S513). The issuance request information includes the user name (consumer Ca), the transaction period information, and the power generation type. Thus, the transmission and reception unit 91 of the node 9 receives the issuance request information transmitted from the certificate issuing server 6.

Next, the storing and reading unit 99 reads out the transaction information and the asset information in which the consumer Ca is set as the owner, within a specific transaction time period indicated by the transaction period information received at S513 (S514). In this case, the storing and reading unit 99 reads out particular transaction information having the transaction date and time that falls within the specific transaction time period and the new owner of the consumer Ca. Further, the storing and reading unit 99 reads the asset information having the asset ID, which is indicated by the particular transaction information that is read.

As illustrated in FIG. 23, the transaction processing unit 94 generates nth transaction information, and adds a block containing the nth transaction information to the chain of blocks containing the first transaction information, which is stored in the storage unit 9000 (S515). The asset processing unit 95 changes contents of the first asset information according to the nth transaction information (S516). The processing from S515 and S517 is performed in a substantially similar manner to the processing from S209a and S210a of FIG. 22. Further, since the processing from S517 to S520 is performed in a substantially similar manner as the processing from S211a to S214a of FIG. 22, the description thereof will be omitted.

As described above, in the transaction system 1C according to the modified example 3, the image processing apparatus 7 displays a list of transaction data for which certificates can be issued, to allow the applicant E to select desired transaction details. This can reduce the burden on the applicant E, in the process of issuing the certificate.

At S508, the node 9 may be configured not to transmit transaction data having the issuance status of "issued". Further, the certification issuance screen displayed at S510 may display the transaction data having the issuance status of "issued" in a manner selectable. When the transaction data having the issuance status of "issued" is selected at S511, the node 9 having received the issuance request information determines the issuance status of the certificate in a similar manner as in S208 of FIG. 22, and transmits an issuance completion notification to the image processing apparatus 7 via the certificate issuing server 6 in a similar manner as S209b and S210b of FIG. 22.

Although the modified example 3 has been described as a modification of the processes in FIGs. 20 and 22, the processing of the modified example 3 can also be applied to the processing in FIGs. 26 and 27 (modified example 1) or the processing in FIGs. 29 and 30 (modified example 2).

### [Summary]

As described above, a node according to an embodiment of the present invention, which is implemented by the node 9 or the node 9A in the blockchain network 90, stores asset information, which indicates a type of production method of asset and an issuance status of a certificate that verifies the production method of asset. The node 9 or 9A receives issuance request information indicating a request to issue a certificate for a particular asset, which is transmitted from the intermediary system 1000 that intermediates processing of issuing a certificate to the image processing apparatus 7 and 7A (an example of an information processing apparatus). When the issuance status of the asset corresponding to the received issuance request information is "not issued", the node 9 or 9A updates the issuance status indicated in the stored asset information to "issued". When the issuance status of the asset corresponding to the received issuance request information is "issued", the node 9 or 9A transmits an issuance completion notification indicating that the certificate has been issued to the image processing apparatus 7 or 7A. Accordingly, the node 9 or 9A can prevent double issuance, when issuing a certificate of a production method of asset.

In the node 9 or 9A according to an embodiment of the present invention, the asset information indicates an owner of the asset, and the node 9 or 9A updates the issuance status of the asset information for a particular owner, which corresponds to the identification information (for example, the user name) indicated in the issuance request information. Further, the nodes 9 or 9A updates the issuance status of the asset information indicating the asset corresponding to a production method indicated in the issuance request information. Thus, the node 9 or 9A manages the asset information indicating a type of production method of asset, the issuance status of a certificate for the production method, and the owner of the asset, such that a type of production method can be verified without fraud.

Furthermore, the transaction system 1 or 1A according to one or more embodiments of the present invention includes a node 9 or 9A in the blockchain network 90 and an image processing apparatus 7 (an example of an information processing apparatus). The image processing apparatus 7 transmits issuance request information indicating a request for issuing a certificate to the intermediary system 1000, receives certificate data generated based on the transmitted issuance request information from the intermediary system 1000, and outputs the received certificate data. Accordingly, the transaction system 1 or 1A causes the image processing apparatus 7 to display or print a production method certificate, which is acquired from the certificate issuing server 6 (the intermediary system 1000), for output. This allows the applicant E to easily acquire the production method certificate, which may be necessary for various applications.

Furthermore, the transaction system 1B according to one or more embodiments of the present invention includes a node 9A in the blockchain network 90 and an image processing apparatus 7A (an example of an information processing apparatus). The image processing apparatus 7A transmits issuance request information indicating a request for issuing a certificate to the node 9A, receives certificate data generated based on the transmitted issuance request information from the node 9A, and outputs the received certificate data. As described above, when the applicant E outputs the production method certificate using the image processing apparatus 7A, the transaction system 1B can refer to the transaction history of the blockchain network 90 without requiring a system or an apparatus other than the image processing apparatus 7A.

Furthermore, in the transaction system 1 according to at least one embodiment of the present invention, the certificate data includes a transaction identification image for identifying a transaction for which a certificate related to the certificate data has been issued. Accordingly, the transaction system 1 is able to refer to the transaction history of the blockchain network 90 using the transaction identification image included in the issued production method certificate, so as to confirm the validity of the transaction.

### Other Embodiments

In any one of the above-described embodiments, the asset information includes information on the owner of the asset, however, the asset information may not include such information on the owner. For example, when the user is consuming electricity produced by the user, such that the user is the producer of the asset, there is no need to transfer the asset to another person (another company), as long as a type of production method can be verified.

Further, in any one of the above-described embodiments, electricity is used as an example of asset. Examples of asset include any other asset that physically exists (or exists in reality), and any other asset that does not physically exist (or not exit in reality).

Examples of asset that physically exists (or exists in reality) include, but are not limited to, foods such as grains, vegetables, fruits, meats, marine products or processed foods. When the assets are grains, vegetables and fruits, the asset information includes supplementary information indicating whether or not pesticides have been used, or information indicating a producer or a place of production. When the asset is meat, the asset information includes supplementary information indicating whether or not the animal is bred using a genetically modified crop, or information indicating a producer or a place of production. When the asset is a marine product such as fish or shellfish, the asset information includes supplementary information indicating a natural product or aquaculture, or information indicating a producer (fisherman) or a production area (fishing area). When the asset is a processed product, the asset information includes supplementary information indicating an allergen, information indicating whether or not the product has been processed using a genetically modified crop, or information indicating a location of a processor or a processing plant.

Examples of asset that physically exists (or exists in reality) include, but are not limited to, real estate such as land and buildings, and movable property such as goods or quantity of goods. When the asset is real estate, the asset information includes supplementary information such as ownership of the asset. When the asset is movable property, the asset information includes supplementary information such as ownership of the asset.

On the other hand, examples of asset that does not physically exist (or not exit in reality) include, but are not limited to, tokens (virtual currency) or quantity of tokens, carbon dioxide emission credits, intellectual property rights, and contracts. When the asset is a token, the asset information includes supplementary information on such as ownership of the asset. When the asset is a carbon dioxide emission credit, the asset information includes supplementary information on such as ownership of the asset. When the asset is a right such as an intellectual property right, the asset information includes supplementary information on such as the owner of the right, the transferee of the right, and the licensee. When the asset is a contract, the asset information includes supplementary information on such as contract conditions and contract performance. In addition or in alternative to contracts, treaties, agreements, promises, and memorandums (memos) may be treated as asset.

Further, other types of asset that can be managed in a substantially similar manner as the example case of electricity, to allow postpaid processing, include gas, water, and communication. In the case of gas, water, or communication, the asset information includes information such as ownership of the asset.

Each of the above-described hardware components, like CPU 201, 301, 501, 601, 701 and 901, may be a single device or a plurality of devices. Each of the functions of the embodiments described above can be implemented by one or more processing circuits or circuitry. In this embodiment, processing circuitry includes a programmed processor, as a processor includes circuitry. A processing circuit also includes devices such as an application specific integrated circuit (ASIC), a digital signal processor (DSP), a field programmable gate array (FPGA), a system on a chip (SOC), a graphics processing unit (GPU), and conventional circuit components arranged to perform the recited functions.

Further, various tables of any one of the above-described embodiments may be generated by machine learning, and data of associated items can be classified such that use of tables can be optional. In the present disclosure, machine learning is a technique that enables a computer to acquire human-like learning ability. Machine learning refers to a technology in which a computer autonomously generates an algorithm required for determination such as data identification from learning data loaded in advance, and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

Although the node, the transaction system, the processing method, the program, and the blockchain network according to one embodiment of the present invention have been described above. The present invention is not limited to the above-described embodiments, and can be modified within the scope of those skilled in the art, such as addition, modification, or deletion of other embodiments, and all aspects are included in the scope of the present invention as long as the effects and advantages of the present invention are achieved.

### [Reference Signs List]

1, 1A, 1B, 1C Transaction system
2 Smartphone (example of communication terminal)
3 Smart meter (example of a measurement terminal)
4 Power generator
5 Intermediary server
6 Certificate issuing server
7, 7A Image Processing Apparatus (example of information processing apparatus)
8 Electrical device
9, 9A Node
10 Power grid network
61 transmission and reception unit (example of third reception means, example of third transmission means)
63 Generation unit (example of generation means)
71 Transmission and reception unit (example of second transmission means, example of second reception means)
72 Reception unit
73 Display control unit (example of output means)
75 Print control unit (example of output means)
77 Generation unit
90 Blockchain network
91 Transmission and reception unit (example of reception means, example of transmission means)
93 Determination unit
94 Transaction processing unit
95 Asset processing unit (example of asset processing means)
96 Generation unit (example of generation means)
100 Communication network
1000 Intermediary system
9000 Storage unit (example of storage means)

## Claims

1. A node on a blockchain network, comprising:
storage means configured to store asset information, the asset information indicating a type of a production method of an asset and an issuance status of a certificate that certifies the production method;
reception means configured to receive issuance request information transmitted from an information processing apparatus, the issuance request information requesting issuance of the certificate for a particular asset;
asset processing means configured to update the asset information that is stored to have an issuance status of issued, in a case where the asset corresponding to the received issuance request information has an issuance status of unissued; and
transmission means configured to transmit, to the information processing apparatus, an issuance completion notification indicating that the certificate has been issued in a case where the asset corresponding to the received issuance request information has an issuance status of issued.

2. The node of claim 1,
wherein the asset information further indicates an owner of the asset, and
the asset processing means updates the issuance status of the asset information indicating an owner that corresponds to identification information of the issuance request information.

3. The node of claim 1 or 2, wherein the asset processing means updates the issuance status of the asset information indicating the asset that corresponds to a production method of the issuance request information.

4. The node of any one of claims 1 to 3, wherein
the asset is electricity, and
the type of the production method includes a production method using renewable energy, a production method using fossil fuel, or a production method using nuclear power.

5. The node of claim 4, wherein the renewable energy is produced from solar light, solar heat, wind power, biomass, geothermal power, hydropower, or heat in the atmosphere.

6. A transaction system comprising:
the node according to any one of claims 1 to 5; and
an information processing apparatus including:
second transmission means configured to transmit the issuance request information to an intermediary system that intermediates processing of issuing the certificate to the information processing apparatus; and
second reception means configured to receive certificate data generated based on the issuance request information transmitted from the intermediary system; and
output means configured to output the received certificate data.

7. The transaction system of claim 6, further comprising:
an intermediary system,
wherein the transmission means transmits an update notification indicating that the issuance status has been updated by the asset processing means to the intermediary system, and
the intermediary system includes:
third reception means configured to receive the update notification from the node;
generation means configured to generate the certificate data based on the asset information indicated by the received update notification; and
third transmission means configured to transmit the generated certificate data to the information processing apparatus.

8. The transaction system of claim 6, wherein
the node further includes
generation means configured to generate certificate data including the asset information having the issuance status updated by the asset processing means, and
the transmission means transmits the generated certificate data to the intermediary system.

9. A transaction system comprising:
the node according to any one of claims 1 to 5; and
an information processing apparatus including
second transmission means configured to transmit the issuance request information to the node;
second reception means configured to receive, from the node, certificate data generated based on the transmitted issuance request information; and
output means configured to output the received certificate data.

10. The transaction system of claim 9, wherein
the node further includes generation means configured to generate certificate data including the asset information having the issuance status updated by the asset processing means, and
the transmission means transmits the generated certificate data to the information processing apparatus.

11. The transaction system of any one of claims 6 to 10, wherein the certificate data includes a transaction identification image for identifying a transaction for which a certificate is issued based on the certificate data.

12. The transaction system of any one of claims 6 to 11, wherein the output means outputs the certificate data by printing.

13. The transaction system of any one of claims 6 to 12, wherein the output means causes display means to display a display image presenting the certificate data.

14. A processing method executed by a node on a blockchain network,
the node including storage means configured to store asset information, the asset information indicating a type of a production method of an asset and an issuance status of a certificate that certifies the production method,
the method comprising:
receiving issuance request information transmitted from an information processing apparatus, the issuance request information requesting issuance of the certificate for a particular asset;
updating the asset information to have an issuance status of issued, in a case where the asset corresponding to the received issuance request information has an issuance status of unissued; and
transmitting, to the information processing apparatus, an issuance completion notification indicating that the certificate has been issued in a case where the asset corresponding to the received issuance request information has an issuance status of issued.

15. A program, executed by a node on a blockchain network,
the node including storing means configured to store asset information, the asset information indicating a type of a production method of an asset and an issuance status of a certificate that certifies the production method,
the program causing the node to execute a method comprising:
receiving issuance request information transmitted from an information processing apparatus, the issuance request information requesting issuance of the certificate for a particular asset;
updating the asset information to have an issuance status of issued, in a case where the asset corresponding to the received issuance request information has an issuance status of unissued; and
transmitting, to the information processing apparatus, an issuance completion notification indicating that the certificate has been issued in a case where the asset corresponding to the received issuance request information has an issuance status of issued.

16. A blockchain network comprising:
storage means configured to store asset information, the asset information indicating a type of a production method of an asset and an issuance status of a certificate that certifies the production method;
reception means configured to receive issuance request information transmitted from an information processing apparatus, the issuance request information requesting issuance of the certificate for a particular asset;
asset processing means configured to update an issuance status of the stored asset information to issued, in a case where the issuance status of the asset corresponding to the received issuance request information indicates unissued; and
transmission means configured to transmit, to the information processing apparatus, an issuance completion notification indicating that the certificate has been issued when the issuance status of the asset corresponding to the received issuance request information is issued.

## Amended claims

### Amended claims under Art. 19.1 PCT

1. A node on a blockchain network, comprising:
storage means configured to store asset information, the asset information indicating a type of a production method of an asset and an issuance status of a certificate that certifies the production method;
reception means configured to receive issuance request information transmitted from an information processing apparatus, the issuance request information requesting issuance of the certificate for a particular asset;
asset processing means configured to update the asset information that is stored to have an issuance status of issued, in a case where the particular asset corresponding to the received issuance request information has an issuance status of unissued; and
transmission means configured to transmit, to the information processing apparatus, an issuance completion notification indicating that the certificate has been issued in a case where the particular asset corresponding to the received issuance request information has an issuance status of issued.

2. The node of claim 1,
wherein the asset information further indicates an owner of the asset, and
the asset processing means updates the issuance status of the asset information indicating an owner that corresponds to identification information of the issuance request information.

3. The node of claim 1 or 2, wherein the asset processing means updates the issuance status of the asset information indicating the asset that corresponds to a production method of the issuance request information.

4. The node of any one of claims 1 to 3, wherein
the asset is electricity, and
the type of the production method includes a production method using renewable energy, a production method using fossil fuel, or a production method using nuclear power.

5. The node of claim 4, wherein the renewable energy is produced from solar light, solar heat, wind power, biomass, geothermal power, hydropower, or heat in the atmosphere.

6. A transaction system comprising:
the node according to any one of claims 1 to 5; and
an information processing apparatus including:
second transmission means configured to transmit the issuance request information to an intermediary system that intermediates processing of issuing the certificate to the information processing apparatus; and
second reception means configured to receive certificate data generated based on the issuance request information transmitted from the intermediary system; and
output means configured to output the received certificate data.

7. The transaction system of claim 6, further comprising:
an intermediary system,
wherein the transmission means transmits an update notification indicating that the issuance status has been updated by the asset processing means to the intermediary system, and
the intermediary system includes:
third reception means configured to receive the update notification from the node;
generation means configured to generate the certificate data based on the asset information indicated by the received update notification; and
third transmission means configured to transmit the generated certificate data to the information processing apparatus.

8. The transaction system of claim 6, wherein
the node further includes
generation means configured to generate certificate data including the asset information having the issuance status updated by the asset processing means, and
the transmission means transmits the generated certificate data to the intermediary system.

9. A transaction system comprising:
the node according to any one of claims 1 to 5; and
an information processing apparatus including
second transmission means configured to transmit the issuance request information to the node;
second reception means configured to receive, from the node, certificate data generated based on the transmitted issuance request information; and
output means configured to output the received certificate data.

10. The transaction system of claim 9, wherein
the node further includes generation means configured to generate certificate data including the asset information having the issuance status updated by the asset processing means, and
the transmission means transmits the generated certificate data to the information processing apparatus.

11. The transaction system of any one of claims 6 to 10, wherein the certificate data includes a transaction identification image for identifying a transaction for which a certificate is issued based on the certificate data.

12. The transaction system of any one of claims 6 to 11, wherein the output means outputs the certificate data by printing.

13. The transaction system of any one of claims 6 to 12, wherein the output means causes display means to display a display image presenting the certificate data.

14. A processing method executed by a node on a blockchain network,
the node including storage means configured to store asset information, the asset information indicating a type of a production method of an asset and an issuance status of a certificate that certifies the production method,
the method comprising:
receiving issuance request information transmitted from an information processing apparatus, the issuance request information requesting issuance of the certificate for a particular asset;
updating the particular asset information to have an issuance status of issued, in a case where the particular asset corresponding to the received issuance request information has an issuance status of unissued; and
transmitting, to the information processing apparatus, an issuance completion notification indicating that the certificate has been issued in a case where the particular asset corresponding to the received issuance request information has an issuance status of issued.

15. A program, executed by a node on a blockchain network,
the node including storing means configured to store asset information, the asset information indicating a type of a production method of an asset and an issuance status of a certificate that certifies the production method,
the program causing the node to execute a method comprising:
receiving issuance request information transmitted from an information processing apparatus, the issuance request information requesting issuance of the certificate for a particular asset;
updating the particular asset information to have an issued status of issued, in a case where the particular asset corresponding to the received issuance request information has an issuance status of unissued; and
transmitting, to the information processing apparatus, an issuance completion notification indicating that the certificate has been issued in a case where the particular asset corresponding to the received issuance request information has an issuance status of issued.

16. A blockchain network comprising:
storage means configured to store asset information, the asset information indicating a type of a production method of an asset and an issuance status of a certificate that certifies the production method;
reception means configured to receive issuance request information transmitted from an information processing apparatus, the issuance request information requesting issuance of the certificate for a particular asset;
asset processing means configured to update an issuance status of the stored asset information to issued, in a case where the issuance status of the asset corresponding to the received issuance request information indicates unissued; and
transmission means configured to transmit, to the information processing apparatus, an issuance completion notification indicating that the certificate has been issued when the issuance status of the asset corresponding to the received issuance request information is issued.
